# EUROPEAN PATENT APPLICATION

(11) **EP 4 316 858 A1**
(43) Date of publication of application: **07.02.2024**
(21) Application number: 22781255.9
(22) Date of filing: 31.03.2022
(51) Int. Cl.: B41J 2/165, B41J 2/17, C09D 11/30, C11D 7/22, C11D 7/26, C11D 7/32, C11D 7/50

(54) **MAINTENANCE LIQUID, AND INKJET RECORDING DEVICE MAINTENANCE METHOD EMPLOYING SAME**

(30) Priority: 31.03.2021 JP 2021062468; 28.06.2021 JP 2021106427; 28.06.2021 JP 2021106428
(71) Applicant: DNP Fine Chemicals Co., Ltd., Yokohama-shi, Kanagawa 226-0022 (JP)
(72) Inventor: YOSHIMORI, Keishiro, Yokohama-shi, Kanagawa 226-0022 (JP); ORIKASA, Yuka, Yokohama-shi, Kanagawa 226-0022 (JP); MATSUMOTO, Kisei, Yokohama-shi, Kanagawa 226-0022 (JP); UTAKA, Koujun, Yokohama-shi, Kanagawa 226-0022 (JP); TAMURA, Mitsuyoshi, Yokohama-shi, Kanagawa 226-0022 (JP)
(74) Representative: Hasegawa, Kan
(86) International application number: PCT/JP2022/016611
(87) International publication number: WO 2022/211045

(57) **Abstract**

Provided are: a maintenance liquid having a high member suitability with respect to members constituting an ink flow path, and having excellent cleaning properties; a maintenance liquid having excellent moisture retaining properties in a plastic accommodating body and a plastic supply body of an inkjet recording device; and a maintenance liquid having high member suitability with respect to a resin cured product, and having excellent cleaning properties. This maintenance liquid for use in an inkjet recording device contains an organic solvent, wherein the moisture content of the maintenance liquid is at most equal to 5% by mass of the total amount of the maintenance liquid, and the organic solvent contains at least one of an amide-based solvent and a lactone-based solvent. Further, the maintenance liquid for use in an inkjet recording device contains an organic solvent A2, wherein the organic solvent A2 has a boiling point of 250°C or lower and a volatilization rate, upon volatilization by means of the storage test described below, of 15% by mass or less. Further, the maintenance liquid for use in an inkjet recording device provided with an inkjet head including a resin cured product, as a component member, contains an organic solvent, wherein the organic solvent contains the following organic solvent A3. Organic solvent A3: At least one solvent selected from the group comprising alkylamide-based solvents (a1), cyclic amide-based solvents (a2), and lactone-based solvents (a3)

## Description

### TECHNICAL FIELD

The present invention relates to a maintenance liquid and an inkjet recording device maintenance method employing the same.

### BACKGROUND ART

As an inkjet ink composition, an aqueous ink composition obtained by dissolving or dispersing a colorant in water or a mixed liquid of water and an organic solvent, or a non-aqueous ink composition obtained by dissolving or dispersing a colorant in an organic solvent containing no water is widely used.

In an inkjet recording device that performs recording using such an ink composition, when clogging occurs in an ink flow path, inkjet head, or the like due to a component derived from the ink composition or a component derived from members of the device, ink supply may be hindered or ink ejection failure may occur. Therefore, there is known a maintenance liquid that can circulate and the like in the ink flow path through which the ink composition in the inkjet recording device is circulated. Note that the component derived from the ink composition refers to a solid component including a colorant component, a resin and the like contained in the ink composition ejected by the inkjet recording device, a metal compound derived from a metal contained as an impurity, and the like. The component derived from the members of the device refers to a precipitate of the members of the device, which is generated by dissolving only an extremely small part of the members of the device with the ink composition, and the like.

For example, Patent Literature 1 describes a maintenance liquid containing two or more organic solvents having a predetermined relation. According to Patent Literature 1, this maintenance liquid is excellent in a drying property and moisture retaining property.

Patent Literature 2 describes a maintenance liquid containing a lactone-based solvent and 30 mass% or more of an alkylene glycol monoether-based solvent with respect to a total mass of the solvent-based maintenance liquid. Patent Literature 2 discloses that this maintenance liquid has a reduced member attack property and is suitable for cleaning an inkjet recording device that uses an ink containing an organic solvent as a main component.

Patent Document 1: Japanese Patent No. 6440094
Patent Document 2: Japanese Unexamined Patent Application, Publication No. 2017-186451

### DISCLOSURE OF THE INVENTION

### Problems to be Solved by the Invention

Meanwhile, such a maintenance liquid for use in an inkjet recording device comes into contact with component members in the inkjet recording device during use. Therefore, member suitability for such members is required.

On the other hand, the maintenance liquid is used to remove the component derived from the ink composition adhering to the inside of the ink flow path and the like, and is also required to have a cleaning property for cleaning the ink flow path.

The maintenance liquid may remain loaded for a long period of time in a plastic container or a plastic supply body in the inkjet recording device. As a result, the organic solvent contained in the maintenance liquid may volatilize, and the moisture retaining property may decrease. Then, the component derived from the ink composition, which has been cleaned, may precipitate again, and as a result, the ink composition adhering to the members may not be removed.

Further, such a maintenance liquid for use in an inkjet recording device is used to remove the component derived from the ink composition adhering to the inside of the ink flow path and the like, and is also required to have a cleaning property for cleaning the ink flow path.

On the other hand, the maintenance liquid comes into contact with an inkjet head of the inkjet recording device during use. Here, the inkjet head includes component members adhered by a resin cured product, and when the maintenance liquid passes through the inkjet head or when a wiping member impregnated with the maintenance liquid comes into contact with a nozzle opening of the inkjet head, the resin cured product comes into contact with the maintenance liquid. For this reason, the maintenance liquid is required to have member suitability with respect to such a resin cured product.

An object of the present invention is to provide a maintenance liquid having high member suitability with respect to members constituting an inkjet recording device, and having an excellent cleaning property.

Another object of the present invention is to provide a maintenance liquid having an excellent moisture retaining property in a plastic container and a plastic supply body of an inkjet recording device.

A further object of the present invention is to provide a maintenance liquid having high member suitability with respect to a resin cured product, and having an excellent cleaning property.

### Means for Solving the Problems

In order to solve the above-mentioned problems, the present inventors have conducted diligent studies and found that the above-mentioned problems can be solved by a maintenance liquid having a moisture content controlled to a predetermined range or less and containing at least one or more of an amide-based solvent and a lactone-based solvent, and thus the present invention has been completed.

In order to solve the above-mentioned problems, the present inventors have conducted diligent studies and also found that the above-mentioned problems can be solved by a maintenance liquid containing an organic solvent whose volatilization rate, upon volatilization by means of a storage test, is less than a predetermined value, and thus the present invention has been completed.

Further, in order to solve the above-mentioned problems, the present inventors have conducted diligent studies and found that the above-mentioned problems can be solved by a maintenance liquid containing a predetermined organic solvent, and thus the present invention has been completed. Specifically, provided are the following.

(1) A maintenance liquid for use in an inkjet recording device, the maintenance liquid containing an organic solvent, the maintenance liquid having a moisture content of 5 mass% or less in a total amount of the maintenance liquid, and the organic solvent containing at least one or more of an amide-based solvent or a lactone-based solvent.
(2) The maintenance liquid as described in aspect (1), in which a total content of the amide-based solvent and the lactone-based solvent is 7 mass% or more of the total amount of the maintenance liquid.
(3) The maintenance liquid as described in aspect (1) or (2), in which the organic solvent contains an amide-based solvent.
(4) The maintenance liquid as described in aspect (3), in which the amide-based solvent contains an alkylamide-based solvent.
(5) The maintenance liquid as described in aspect (4), in which the alkylamide-based solvent is represented by the following formula (1-1): 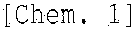 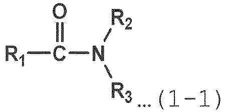 (in the formula (1-1), R₁ represents hydrogen or an alkyl group having 1 or more and 4 or less carbon atoms, and R₂ and R₃ each independently represent an alkyl group having 1 or more and 4 or less carbon atoms).
(6) The maintenance liquid as described in aspect (5), in which the alkylamide-based solvent contains at least one selected from the group consisting of N,N-diethylformamide, N,N-diethylpropanamide, and N,N-diethylacetamide.
(7) The maintenance liquid as described in aspect (1) or (2), in which the organic solvent contains a lactone-based solvent.
(8) The maintenance liquid as described in aspect (7), in which the lactone-based solvent is represented by the following formula (1-3): 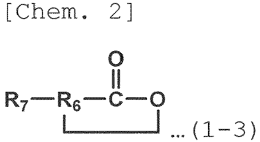 (in the formula (1-3), R₆ represents an alkylene group having 3 or more and 5 or less carbon atoms, and R₇ represents hydrogen or an alkyl group having 1 or more and 2 or less carbon atoms).
(9) The maintenance liquid as described in any one of aspects (1) to (8), in which the organic solvent further contains a glycol ether-based solvent.
(10) The maintenance liquid as described in any one of aspects (1) to (9), in which the organic solvent further contains an organic solvent having an enthalpy of vaporization (EOV) of 45 kJ/mol or more.
(11) The maintenance liquid as described in any one of aspects (1) to (10), in which a moisture absorption amount when the maintenance liquid is placed in an environment with a temperature of 25°C and a humidity of 55% for 100 hours is 4 mass% or less of the total amount of the maintenance liquid.
(12) The maintenance liquid as described in any one of aspects (1) to (11), in which the inkjet recording device performs recording using a non-aqueous ink composition.
(13) A maintenance liquid for use in an inkjet recording device, the maintenance liquid containing an organic solvent A2, in which the organic solvent A2 has a boiling point of 250°C or lower and a volatilization rate as determined by means of a storage test described below, of 15 mass% or less: storage test: a low-density polyethylene tube is filled with the organic solvent A2, sealed, and stored at 50°C for one week.
(14) The maintenance liquid as described in aspect (13), in which a content of the organic solvent A2 is in a range of 1 mass% or more and 95 mass% or less of a total amount of the maintenance liquid.
(15) The maintenance liquid as described in aspect (13) or (14), containing at least one selected from the group consisting of glycol ether monoalkyl, a cyclic ester, a carbonate ester, and an amide-based solvent.
(16) The maintenance liquid as described in aspect (15), containing a cyclic ester, in which the cyclic ester is represented by the following formula (2-1): 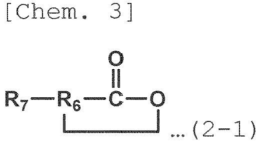 (in the formula (2-1), R₆ represents an alkylene group having 3 or more and 5 or less carbon atoms, and R₇ represents hydrogen or an alkyl group having 1 or more and 2 or less carbon atoms).
(17) The maintenance liquid as described in aspect (15) or (16), containing an amide-based solvent, in which the amide-based solvent is represented by the following formula (2-2) : 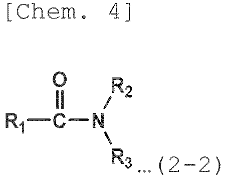 (in the formula (2-2), R₁ represents hydrogen or an alkyl group having 1 or more and 4 or less carbon atoms, and R₂ and R₃ each independently represent hydrogen or an alkyl group having 1 or more and 4 or less carbon atoms).
(18) The maintenance liquid as described in any one of aspects (13) to (17), in which the inkjet recording device includes a plastic member that comes into contact with the maintenance liquid.
(19) The maintenance liquid as described in aspect (18), in which at least part of the plastic member is formed of a polyolefin.
(20) The maintenance liquid as described in aspect (18) or (19), in which the plastic member constitutes a plastic container that holds the maintenance liquid and/or a plastic supply body that supplies the maintenance liquid.
(21) The maintenance liquid as described in any one of aspects (13) to (20), further containing a colorant.
(22) The maintenance liquid as described in any one of aspects (13) to (20), containing no colorant.
(23) The maintenance liquid as described in any one of aspects (13) to (22), further comprising a dispersant.
(24) A maintenance liquid for use in an inkjet recording device provided with an inkjet head including a resin cured product as a component member, the maintenance liquid containing an organic solvent, the organic solvent containing the following organic solvent A3. Organic solvent A3: at least one selected from the group consisting of an alkylamide-based solvent (a1), a cyclic amide-based solvent (a2), and a lactone-based solvent (a3).
(25) The maintenance liquid as described in aspect (24), in which the resin cured product contains at least an epoxy resin and/or a silicon resin.
(26) The maintenance liquid as described in aspect (24) or (25), in which the organic solvent contains the alkylamide-based solvent (a1), and the alkylamide-based solvent (a1) is represented by the following formula (3-1): 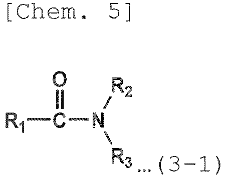 (in the formula (3-1), R₁ represents hydrogen or an alkyl group having 1 or more and 4 or less carbon atoms, and R₂ and R₃ each independently represent hydrogen or an alkyl group having 1 or more and 4 or less carbon atoms).
(27) The maintenance liquid as described in aspect (26), in which the alkylamide-based solvent (a1) contains at least one selected from the group consisting of N,N-diethylformamide, N,N-diethylpropanamide, and N,N-diethylacetamide.
(28) The maintenance liquid as described in aspect (24) or (25), in which the organic solvent contains the cyclic amide-based solvent (a2), and the cyclic amide-based solvent (a2) is represented by the following formula (3-2): 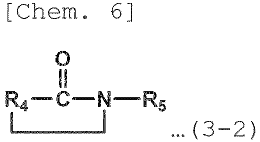 (in the formula (3-2), R₄ represents an alkylene group having 4 or more and 5 or less carbon atoms, and R₅ represents hydrogen or an alkyl group or an unsaturated hydrocarbon group having 1 or more and 4 or less carbon atoms).
(29) The maintenance liquid as described in aspect (28), in which the cyclic amide-based solvent (a2) contains at least one selected from the group consisting of ε-caprolactam, N-methylcaprolactam, and N-vinylcaprolactam.
(30) The maintenance liquid as described in aspect (24) or (25), in which the organic solvent contains the lactone-based solvent (a3), and the lactone-based solvent (a3) is represented by the following formula (3-3): 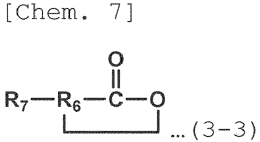 (in the formula (3-3), R₆ represents an alkylene group having 3 or more and 5 or less carbon atoms, and R₇ represents hydrogen or an alkyl group having 1 or more and 2 or less carbon atoms).
(31) The maintenance liquid as described in aspect (30), in which the lactone-based solvent (a3) contains at least one selected from the group consisting of γ-butyrolactone, γ-valerolactone, δ-valerolactone, δ-hexanolactone, and ε-caprolactone.
(32) The maintenance liquid as described in any one of aspects (24) to (31), further containing a colorant.
(33) The maintenance liquid as described in any one of aspects (24) to (31), containing no colorant.
(34) The maintenance liquid as described in any one of aspects (24) to (33), further containing a dispersant.
(35) An inkjet recording device maintenance method, including performing maintenance on an inkjet recording device using the maintenance liquid as described in any one of aspects (1) to (34).
(36) An inkjet recording device, for which the maintenance liquid as described in any one of aspects (1) to (34) is used.
(37) An inkjet recording device, for which the maintenance liquid as described in any one of aspects (13) to (23) is used, the inkjet recording device including a plastic container and/or a plastic supply body, an interior of the inkjet recording device being in contact with the maintenance liquid.
(38) An inkjet recording device, for which the maintenance liquid as described in any one of aspects (24) to (34) is used, the inkjet recording device including an inkjet head including a resin cured product as a component member, the maintenance liquid being used by bringing the maintenance liquid into contact with the resin cured product.

### Effects of the Invention

The maintenance liquid according to the present invention has high member suitability with respect to members constituting an inkjet recording device and an excellent cleaning property.

The maintenance liquid according to the present invention has an excellent moisture retaining property in a plastic container and a plastic supply body of an inkjet recording device.

The maintenance liquid according to the present invention has high member suitability with respect to a resin cured product, and having an excellent cleaning property.

### BRIEF DESCRIPTION OF THE DRAWINGS

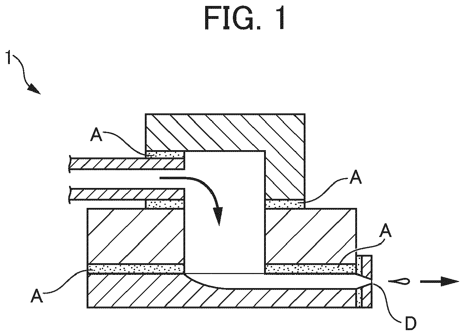

[FIG. 1] FIG. 1 is a schematic diagram (cross-sectional view) showing an example of an inkjet head using a maintenance liquid according to an embodiment.

### PREFERRED MODE FOR CARRYING OUT THE INVENTION

### «1. Summary»

A maintenance liquid according to the present invention is a maintenance liquid for use in an inkjet recording device. Note that the term "for use in an inkjet recording device" means that the maintenance liquid is used to remove a component derived from an ink composition adhering to the inside of an ink flow path or to an inkjet head in the inkjet recording device.

Hereinafter, specific embodiments of the present invention will be described in detail, but the present invention is not limited to the following embodiments at all, and can be implemented with appropriate modifications within the scope of the purpose of the present invention.

### <<1-1. Maintenance Liquid according to First Embodiment>>

A maintenance liquid according to the present embodiment is a maintenance liquid for use in an inkjet recording device.

The maintenance liquid according to the present embodiment is a non-aqueous maintenance liquid containing an organic solvent and having a moisture content of 5 mass% or less of a total amount of the maintenance liquid, in which the organic solvent contains at least one or more of an amide-based solvent and a lactone-based solvent.

With such a configuration, the maintenance liquid has high member suitability with respect to members constituting the inkjet recording device and an excellent cleaning property.

Note that the moisture content is preferably 3.0 mass% or less, more preferably 2.0 mass% or less, and even more preferably 1.5 mass% or less of the total amount of the maintenance liquid.

Hereinafter, each component contained in the maintenance liquid according to the present embodiment will be described.

### [Organic Solvent]

The organic solvent has a function of cleaning clogging in the ink flow path. This organic solvent contains at least one or more of an amide-based solvent and a lactone-based solvent. By containing at least one of the amide-based solvent and the lactone-based solvent, the cleaning property of the maintenance liquid can be improved.

A total content of the amide-based solvent and the lactone-based solvent is not particularly limited, and a lower limit of the total content of the amide-based solvent and the lactone-based solvent is preferably 7 mass% or more, more preferably 10 mass% or more, and even more preferably 15 mass% or more of the total amount of the maintenance liquid. Within such a range, the cleaning property of the maintenance liquid can be more effectively improved. An upper limit of the total content of the amide-based solvent and the lactone-based solvent is preferably 90 mass% or less, more preferably 80 mass% or less, and even more preferably 70 mass% or less. Within such a range, the member suitability with respect to the members constituting the inkjet recording device is further improved.

Hereafter, the amide-based solvent and lactone-based solvent contained in the organic solvent will be described.

### (1) Amide-based Solvent

The amide-based solvent refers to an organic solvent containing a compound having a -C(=O)-N- group (amide bond). By containing the amide-based solvent, the cleaning property of the maintenance liquid can be improved.

Examples of the amide-based solvent can include an alkylamide-based solvent composed of hydrogen or an alkyl group and a -C(=O)-N- group, which is a compound having an alkyl group (CₙH₂ₙ₊₁-) and a -C(=O)-N- group (amide bond), and a cyclic amide-based solvent having a cyclic structure and a - C(=O)-N- group in the cyclic structure.

The alkylamide-based solvent is preferably, for example, an organic solvent composed only of hydrogen or an alkyl group and a -C(=O)-N- group without an alkoxy group, and for example, an alkylamide-based solvent having the following structure can be preferably used. 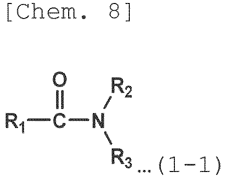 (In the formula (1-1), R₁ represents hydrogen or an alkyl group having 1 or more and 4 or less carbon atoms, and R₂ and R₃ each independently represent hydrogen or an alkyl group having 1 or more and 4 or less carbon atoms).

Note that each of R₂ and R₃ in the formula (1-1) is preferably an alkyl group having 1 to 4 carbon atoms, and more preferably an alkyl group having 2 to 4 carbon atoms.

By containing such an alkylamide-based solvent, not only the cleaning property of the maintenance liquid is improved, but also the member suitability with respect to the members constituting the inkjet recording device is improved.

Specific examples of the alkylamide-based solvent include N,N-diethylformamide, N,N-diethylacetamide, N,N-dipropylformamide, N,N-dibutylformamide, N,N-diethylpropanamide, N,N-dipropylpropanamide, N-ethylformamide, and N-ethylacetamide. Among these, from a viewpoint of particularly exhibiting the effects of the present invention, it is preferable to contain at least one selected from the group consisting of N,N-diethylformamide, N,N-diethylpropanamide, and N,N-diethylacetamide. Among these, it is particularly preferable to contain N,N-diethylformamide.

For example, a cyclic amide-based solvent having the following structure can be preferably used. 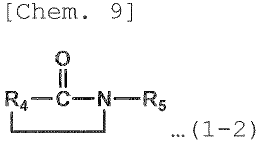 (In the formula (1-2), R₄ represents an alkylene group having 3 or more and 5 or less carbon atoms, and R₅ represents hydrogen or an alkyl group or an unsaturated hydrocarbon group having 1 or more and 2 or less carbon atoms).

Specific examples of the cyclic amide-based solvent include 3-methyl-2-oxazolidinone, 3-ethyl-2-oxazolidinone, N-vinylmethyloxazolidinone, N-methylcaprolactam, N-ethylcaprolactam, N-propylcaprolactam, N-acetylcaprolactam, ε-caprolactam, N-vinylcaprolactam, 2-pyrrolidone, N-methyl-2-pyrrolidone, N-ethyl-2-pyrrolidone, and N-propyl-2-pyrrolidone. Among these, it is preferable to contain at least one selected from the group consisting of ε-caprolactam, N-methylcaprolactam, and N-vinylcaprolactam.

A content of the amide-based solvent is not particularly limited, and a lower limit of the content of the amide-based solvent is preferably in a range of 7 mass% or more, more preferably in a range of 10 mass% or more, and even more preferably in a range of 15 mass% or more of the total amount of the non-aqueous maintenance liquid.

An upper limit of the content of the amide-based solvent is preferably 90 mass% or less, more preferably 80 mass% or less, and even more preferably 70 mass% or less of the total amount of the maintenance liquid.

### (2) Lactone-based Solvent

The lactone-based solvent is a solvent having a cyclic ester structure. By containing the lactone-based solvent, the cleaning property of the maintenance liquid can be improved.

As the lactone-based solvent, for example, a lactone-based solvent having the following structure can be preferably used. 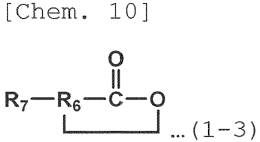 (In the formula (1-3), R₆ represents an alkylene group having 3 or more and 5 or less carbon atoms, and R₇ represents hydrogen or an alkyl group having 1 or more and 2 or less carbon atoms).

Among these, R₆ is preferably 4 or more and 5 or less, and more preferably 5. With such a maintenance liquid containing the lactone-based solvent, the member suitability with respect to the members constituting the inkjet recording device can be further improved, and the moisture retaining property also can be improved. Note that with such a maintenance liquid having a moisture retaining property, volatilization of the maintenance liquid in the inkjet recording device can be prevented, and thus precipitation of a solid component derived from an ink composition due to the volatilization of the maintenance liquid after cleaning can be prevented.

Examples of such a lactone-based solvent include a lactone-based solvent having a 6-membered or higher membered ring, such as δ-valerolactone, δ-hexanolactone, ε-caprolactone, δ-valerolactone, δ-hexalactone, δ-heptalactone, δ-octalactone, δ-nonalactone, δ-decalactone, and δ-undecalactone.

A content of the lactone-based solvent is not particularly limited, and a lower limit of the content of the lactone-based solvent is preferably in a range of 7 mass% or more, more preferably in a range of 10 mass% or more, and even more preferably in a range of 15 mass% or more of the total amount of the maintenance liquid.

An upper limit of the content of the lactone-based solvent is preferably 90 mass% or less, more preferably 80 mass% or less, and even more preferably 70 mass% or less of the total amount of the maintenance liquid.

In the maintenance liquid according to the present embodiment, the organic solvent contains at least one or more of an amide-based solvent and a lactone-based solvent. Among these, it is preferable to contain an amide-based solvent, and as the amide-based solvent, it is more preferable to contain an alkylamide-based solvent, and it is even more preferable to contain an alkylamide-based solvent represented by formula (1-1). As a result, the maintenance liquid according to the present embodiment particularly effectively exhibits the effects of the present invention, and furthermore has better member suitability with respect to the members constituting the inkjet recording device.

### (3) Other Organic Solvents

The maintenance liquid according to the present embodiment may contain an organic solvent other than the amide-based solvent and lactone-based solvent described above. Specific examples include a glycol ether-based solvent and a carbonate ester. Among these, it is preferable to contain a glycol ether-based solvent.

Examples of the glycol ether-based solvent include glycol ether dialkyl in which OH groups at both ends of glycol are alkyl-substituted, and glycol ether monoalkyl in which one OH group of glycol is alkyl-substituted. Examples of the glycol ether-based solvent include, for example, a glycol ether-based solvent represented by the following formula (1-4).

R₈-(-O-R₉)ₙ-O-R₁₀... (1-4)

(In the formula (1-4), R₈ and R₁₀ each independently represent hydrogen or an optionally branched alkyl group having 1 to 8 carbon atoms, and R₉ represents an optionally branched alkylene group having 1 to 4 carbon atoms,
and n represents an integer of 1 or more and 6 or less).

Examples of such a glycol ether-based solvent include: glycol ether monoalkyl such as diethylene glycol mono-n-butyl ether, dipropylene glycol monopropyl ether, diethylene glycol monoethyl ether, diethylene glycol monomethyl ether, triethylene glycol monomethyl ether, triethylene glycol mono-n-butyl ether, tetraethylene glycol monobutyl ether, pentaethylene glycol monobutyl ether, hexaethylene glycol monobutyl ether, dipropylene glycol monomethyl ether, and tripropylene glycol monomethyl ether; and glycol ether dialkyl such as diethylene glycol methyl ethyl ether, diethylene glycol diethyl ether, diethylene glycol dimethyl ether, diethylene glycol dibutyl ether, dipropylene glycol dimethyl ether, diethylene glycol isopropyl methyl ether, triethylene glycol dimethyl ether, tetraethylene glycol dimethyl ether, and tetraethylene glycol diethyl ether.

Examples of the carbonate ester include propylene carbonate, and ethylene carbonate.

Examples of a lactate ester include methyl lactate, ethyl lactate, butyl lactate, propyl lactate, ethylhexyl lactate, amyl lactate, and isoamyl lactate.

Examples of a dibasic ester include dimethyl malonate, diethyl malonate, dipropyl malonate, dimethyl succinate, diethyl succinate, dimethyl glutarate, diethyl glutarate, and dimethyl adipate.

As the other organic solvents, solvents other than the glycol ether-based solvent, carbonate ester, lactate ester, and dibasic ester may be contained. Specific examples of the other organic solvents include a general organic solvent, for example, alcohols such as methyl alcohol, ethyl alcohol, n-propyl alcohol, isopropyl alcohol, and n-butyl alcohol; ketones such as acetone, methyl ethyl ketone, methyl-n-propyl ketone, methyl isopropyl ketone, methyl-n-butyl ketone, methyl isobutyl ketone, methyl-n-amyl ketone, methyl hexyl ketone, methyl isoamyl ketone, diethyl ketone, ethyl-n-propyl ketone, ethyl isopropyl ketone, ethyl-n-butyl ketone, ethyl isobutyl ketone, di-n-propyl ketone, diisobutyl ketone, cyclopentanone, cyclohexanone, methylcyclohexanone, isophorone, and acetyl ketone; acetate esters such as methyl acetate, ethyl acetate, n-propyl acetate, isopropyl acetate, n-butyl acetate, isobutyl acetate, hexyl acetate, and octyl acetate; glycols such as ethylene glycol, diethylene glycol, triethylene glycol, propylene glycol, and dipropylene glycol; acetates such as ethylene glycol monobutyl ether acetate, 2-methylbutyl acetate, 3-methoxybutyl ether acetate, and cyclohexyl acetate; saturated hydrocarbons such as n-hexane, isohexane, n-nonane, isononane, dodecane, and isododecane; unsaturated hydrocarbons such as 1-hexene, 1-heptene, and 1-octene; cyclic saturated hydrocarbons such as cyclohexane, cycloheptane, cyclooctane, cyclodecane, and decalin; cyclic unsaturated hydrocarbons such as cyclohexene, cycloheptene, cyclooctene, 1,1,3,5,7-cyclooctatetraene, and cyclododecene; aromatic hydrocarbons such as benzene, toluene, and xylene; morpholines such as N-methylmorpholine, N-ethylmorpholine, and N-formylmorpholine; a terpene-based solvent; and an ether-based solvent.

A content of the other organic solvents is not particularly limited, and a lower limit of the content of the other organic solvents is preferably in a range of 10 mass% or more, more preferably in a range of 20 mass% or more, and even more preferably in a range of 30 mass% or more. An upper limit of the content of the other organic solvents is preferably in a range of 90 mass% or less, more preferably in a range of 85 mass% or less, and even more preferably in a range of 80 mass% or less.

The organic solvent (amide-based solvent, lactone-based solvent or the other organic solvents) described above preferably includes an organic solvent having an enthalpy of vaporization (EOV) of 45 kJ/mol or more. In the present description, the enthalpy of vaporization is a calculated value determined using Advanced Chemistry Development (ACD/Labs) software, version 11.02.

By containing an organic solvent having an enthalpy of vaporization (EOV) of 45 kJ/mol or more, volatilization of the maintenance liquid in the inkjet recording device can be prevented. When the maintenance liquid volatilizes while the head is filled with the maintenance liquid, a component derived from an ink composition remaining in an interior of the head may precipitate, or air bubbles may enter the interior of the head, and as a result, normal printing may become difficult even after ink loading. By containing the organic solvent having an enthalpy of vaporization (EOV) of 45 kJ/mol or more in this way, the maintenance liquid has an improved moisture retaining property, making the maintenance liquid more suitable for use in an inkjet recording device.

Examples of the organic solvent having an enthalpy of vaporization (EOV) of 45 kJ/mol or more includes: an amide-based solvent such as 3-methyl-2-oxazolidinone (50.4 kJ/mol), 3-ethyl-2-oxazolidinone (50.7 kJ/mol), N-methylcaprolactam (48.5 kJ/mol), N-acetylcaprolactam (47.9 kJ/mol), ε-caprolactam (51.1 kJ/mol), N-vinylcaprolactam (49.2 kJ/mol), and N,N-dimethyl-β-butoxypropionamide (48.5 kJ/mol); a lactone-based solvent such as ε-caprolactone (46.2 kJ/mol), δ-valerolactone (45.4 kJ/mol), and δ-hexanolactone (45.2 kJ/mol); glycol ether monoalkyl such as diethylene glycol monomethyl ether (50.1 kJ/mol), diethylene glycol monoethyl ether (51.0 kJ/mol), diethylene glycol mono-n-butyl ether (54.3 kJ/mol), triethylene glycol monomethyl ether (54.7 kJ/mol), triethylene glycol mono-n-butyl ether (60.0 kJ/mol), tetraethylene glycol monobutyl ether (66.9 kJ/mol), pentaethylene glycol monobutyl ether (72.4 kJ/mol), hexaethylene glycol monobutyl ether (77.6 kJ) /mol), dipropylene glycol monomethyl ether (51.1 kJ/mol), dipropylene glycol monopropyl ether (55.8 kJ/mol), and tripropylene glycol monomethyl ether (59.1 kJ/mol); glycol ether dialkyl such as diethylene glycol dibutyl ether (47.2 kJ/mol), tetraethylene glycol dimethyl ether (49.3 kJ/mol), and tetraethylene glycol diethyl ether (51.9 kJ/mol); a carbonate ester such as propylene carbonate (47.8 kJ/mol) and ethylene carbonate (49.0 kJ/mol); lactate ester such as ethyl lactate (45.6 kJ/mol), butyl lactate (49.5 kJ/mol), propyl lactate (47.8 kJ/mol), ethylhexyl lactate, amyl lactate (51.3 kJ/mol), and isoamyl lactate (51.0 kJ/mol); and a dibasic ester such as dipropyl malonate (46.6 kJ/mol), diethyl succinate (45.5 kJ/mol), diethyl glutarate (47.3 kJ/mol), and dimethyl adipate (46.5 kJ/mol) .

### [Colorant]

The maintenance liquid according to the present embodiment may contain a colorant. The colorant is not particularly limited, and may be a dye-based colorant or a pigment-based colorant, and from a viewpoint of dispersibility in the maintenance liquid, an organic pigment is preferable. A pigment that can be used in the maintenance liquid according to the present embodiment is not particularly limited, and examples of the pigment include organic pigments used in ink compositions in the related art. These may be used alone or may be used in combination of two or more thereof. Note that the maintenance liquid according to the present embodiment may not contain a colorant.

When a pigment is used in the maintenance liquid according to the present embodiment, dispersion stability of the pigment can be improved by using a dispersant or a dispersion aid (pigment derivative) described later. Specific examples of the organic pigment include, for example, an insoluble azo pigment, a soluble azo pigment, a derivative from a dye, a phthalocyanine-based organic pigment, a quinacridone-based organic pigment, a perylene-based organic pigment, a perinone-based organic pigment, an azomethine-based organic pigment, an anthraquinone-based organic pigment (anthrone-based organic pigment), a xanthene-based organic pigment, a diketopyrrolopyrrole-based organic pigment, a dioxazine-based organic pigment, a nickel azo-based pigment, an isoindolinone-based organic pigment, a pyranthrone-based organic pigment, a thioindigo-based organic pigment, a condensed azo-based organic pigment, a benzimidazolone-based organic pigment, a quinophthalone organic pigment, an isoindoline organic pigment, and an organic solid solution pigment such as a quinacridone-based solid solution pigment and a perylene-based solid solution pigment. Examples of other pigments include a lake pigment and a carbon black. The same applies to specific organic pigments contained in maintenance liquids according to second and third embodiments, which will be described later.

When the organic pigment is exemplified by color index (C.I.) numbers, examples thereof include: C.I. pigment yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, 214; C.I. pigment red 5, 7, 9, 12, 48, 49, 52, 53, 57:1, 97, 112, 122, 123, 146, 149, 150, 168, 177, 180, 184, 192, 202, 206, 208, 209, 215, 216, 217, 220, 223, 224, 226, 227, 228, 238, 240, 254, 255, 269, 291; C.I. pigment orange 16, 36, 43, 51, 55, 59, 61, 64, 71, 73; C.I. pigment violet 19, 23, 29, 30, 37, 40, 50; C.I. pigment blue 15, 15:1, 15:3, 15:4, 15:6, 16, 22, 60, 64; C.I. pigment green 7, 36, 58, 59, 62, 63; C.I. pigment brown 23, 25, 26; and C.I. pigment black 7. The same applies to the specific organic pigments contained in maintenance liquids according to the second and third embodiments, which will be described later.

A content of the pigment is not particularly limited, and a lower limit of the content of the pigment is preferably in a range of 0.0005 mass% or more, more preferably in a range of 0.001 mass% or more, and even more preferably in a range of 0.005 mass% or more of the total amount of the maintenance liquid. An upper limit of the content of the pigment is preferably in a range of 0.5 mass% or less, more preferably in a range of 0.1 mass% or less, and even more preferably in a range of 0.05 mass% or less of the total amount of the maintenance liquid.

### [Dispersant]

A dispersant may be used in the maintenance liquid according to the present embodiment, if necessary. As the dispersant, a polymer dispersant may be used. Such dispersant has a main chain containing polyester, polyacrylic, polyurethane, polyamine, polycaprolactone, or the like, and a side chain containing a polar group such as an amino group, a carboxyl group, a sulfone group, or a hydroxyl group. As a polyacrylic-based dispersant, for example, Disperbyk-2000, 2001, 2008, 2009, 2010, 2020, 2020N, 2022, 2025, 2050, 2070, 2095, 2150, 2151, 2155, 2163, 2164, BYKJET-9130, 9131, 9132, 9133, 9151 (manufactured by BYK Japan KK), Efka PX4310, PX4320, PX4330, PA4401, 4402, PA4403, 4570, 7411, 7477, PX4700, PX4701 (manufactured by BASF SE), TREPLUS D-1200, D-1410, D-1420, MD-1000 (manufactured by Otsuka Chemical Co., Ltd.), and Floren DOPA-15BHFS, 17HF, 22, G-700, 900, NC-500, GW-1500 (manufactured by KYOEISHA CHEMICAL Co., LTD.), are used. As a polycaprolactone-based dispersant, for example, Ajisper PB821, PB822, PB881 (manufactured by Ajinomoto Fine-Techno Co., Inc.), Hinoact KF-1000, T-6000, T-7000, T-8000, T-8000E, T-9050 (manufactured by Kawaken Fine Chemicals Co., Ltd.), Solsperse 20000, 24000, 32000, 32500, 32550, 32600, 33000, 33500, 34000, 35200, 36000, 37500, 39000, 71000, 76400, 76500, 86000, 88000, J180, J200 (manufactured by Lubrizol Corporation), and TEGO Dispers 652, 655, 685, 688, 690 (manufactured by Evonik Japan Co., Ltd.) are used. As a preferable dispersant, BYKJET-9130, 9131, 9132, 9133, 9151, Efka PX4310, PX4320, PX4330, PX4700, PX4701, Solsperse 20000, 24000, 32000, 33000, 33500, 34000, 35200, 39000, 71000, 76500, 86000, 88000, J180, J200, TEGO Dispers 655, 685, 688, 690, and the like are used. These may be used alone or a mixture thereof may be used. The same applies to the dispersant contained in the maintenance liquids according to the second and third embodiments, which will be described later.

A content of the dispersant is not particularly limited, and a lower limit of the content of the dispersant is preferably in a range of 0.0001 mass% or more, more preferably in a range of 0.0005 mass% or more, and even more preferably in a range of 0.001 mass% or more of the total amount of the maintenance liquid. An upper limit of the content of the dispersant is preferably in a range of 3.0 mass% or less, more preferably in a range of 1.0 mass% or less, and even more preferably in a range of 0.5 mass% or less of the total amount of the maintenance liquid. The same applies to the dispersant contained in the maintenance liquids according to the second and third embodiments, which will be described later.

### [Dispersion Aid]

A dispersion aid may be used in the maintenance liquid according to the present embodiment, if necessary. The dispersion aid adheres to a surface of the colorant (pigment), and a functional group of the dispersion aid increases affinity with the organic solvent and dispersant in the maintenance liquid, improving the dispersion stability. As the dispersion aid, a known pigment derivative having a functional group such as an acidic group, a basic group, or a neutral group in an organic pigment residue can be used. The same applies to the dispersion aid contained in the maintenance liquids according to the second and third embodiments, which will be described later.

### [Surfactant]

In the maintenance liquid according to the present embodiment, a surfactant may be added for the purpose of reducing volatilization of the maintenance liquid in devices such as a nozzle portion and the inside of a tube, preventing solidification of such a maintenance liquid, or exhibiting redissolvability when the maintenance liquid solidifies, or for the purpose of reducing a surface tension and improving the cleaning property of the maintenance liquid. Examples of the surfactant include nonionic P-208, P-210, P-213, E-202S, E-205S, E-215, K-204, K-220, S-207, S-215, A-10R, A-13P, NC-203, NC-207 (manufactured by NOF CORPORATION), Emulgen 106, 108, 707, 709, A-90, A-60 (manufactured by Kao Corporation), Floren G-70, D-90, TG-740W (manufactured by KYOEISHA CHEMICAL Co., LTD.), Poem J-0081HV (manufactured by Riken Vitamin Co., Ltd.), Adekatol NP-620, NP-650, NP-660, NP-675, NP-683, NP-686, Adekacol CS-141E, TS-230E (manufactured by Adeka Co., Ltd.), Sorgen 30V, 40, TW-20, TW-80, and Neugen CX-100 (manufactured by DKS Co. Ltd.), which are polyoxyalkylene alkyl ethers. As a fluorine-based surfactant, it is preferable to use a fluorine-modified polymer, and specific examples thereof include BYK-340 (manufactured by BYK Japan KK). As a silicone-based surfactant, it is preferable to use polyester-modified silicone or polyether-modified silicone, and specific examples thereof include BYK-313, 315N, 322, 326, 331, 347, 348, and BYK-UV3500, 3510, 3530, 3570 (both manufactured by BYK Japan KK). Specific examples of an acetylene glycol-based surfactant include Surfynol (registered trademark) 82, 104, 465, 485, TG (both manufactured by Air Products and Chemicals, Inc.), Olfine (registered trademark) STG, and E1010 (both manufactured by Nissin Chemical Industry CO., Ltd.). Note that the maintenance liquid according to the present embodiment may not contain a surfactant. The same applies to the surfactant contained in the maintenance liquids according to the second and third embodiments, which will be described later.

The surfactant is not limited to those described above, an anionic surfactant, a cationic surfactant, an amphoteric surfactant, or a nonionic surfactant may be used, and may be appropriately selected according to an addition purpose. The same applies to the surfactant contained in the maintenance liquids according to the second and third embodiments, which will be described later.

### [Other Components]

The maintenance liquid according to the present embodiment may contain, as optional components, known additives such as a light stabilizer such as an antioxidant or an ultraviolet absorber, an epoxide, a polycarboxylic acid, a surface conditioner, a slip agent, a leveling agent (acrylic-based leveling agent or silicone-based leveling agent), an antifoaming agent, a pH adjuster, a bactericide, a preservative, a deodorant, a charge adjuster, a wetting agent, a pigment, and an extender pigment. The same applies to the surfactant contained in the maintenance liquids according to the second and third embodiments, which will be described later.

### [Regarding Moisture]

The maintenance liquid according to the present embodiment is a non-aqueous maintenance liquid having a moisture content of 5 mass% or less of the total amount of the maintenance liquid. In this way, the maintenance liquid has an excellent cleaning property.

Furthermore, it is preferable that the maintenance liquid according to the present embodiment absorbs moisture in the atmosphere as less as possible. Specifically, it is preferable that a moisture absorption amount when the maintenance liquid is placed in an environment with a temperature of 25°C and a humidity of 55% for 100 hours is 4.0 mass% or less of the total amount of the maintenance liquid. Such a maintenance liquid that absorbs the moisture in the atmosphere as less as possible has an excellent cleaning property, and can prevent the component derived from the ink composition, which has been removed, from being regenerated due to an increased moisture content in the inkjet recording device.

Specifically, for example, in a case of wiping a nozzle opening of the inkjet head by immersing a wiping member in the maintenance liquid, when immersing the wiping member in the maintenance liquid that easily absorbs water and leaving the wiping member in an open state, and then wiping the nozzle opening, the ink composition adhering to the nozzle opening may partially aggregate due to the moisture absorbed by the maintenance liquid. As a result, the nozzle opening is clogged with the aggregate of the ink composition, and the nozzle becomes a non-ejecting nozzle.

The maintenance liquid that absorbs the moisture in the atmosphere as less as possible can prevent the occurrence of such a non-ejecting nozzle. Note that in the present description, such a property of the maintenance liquid is referred to as a "left cleaning property".

In a moisture absorption test of the maintenance liquid, a 1-liter bottle containing the maintenance liquid is put into a constant temperature bath (temperature: 25°C, humidity: 55%), is placed in the constant temperature bath for 100 hours while gently stirring the maintenance liquid in a state where a lid of the bottle is opened, and a moisture absorption rate after placement is obtained.

Note that in order to obtain the maintenance liquid that absorbs the moisture in the atmosphere as less as possible, it is preferable not to contain a large amount of organic solvents having a high moisture absorption property.

For example, as the glycol ether-based solvents, the glycol ether monoalkyl contains an OH group, and thus is an organic solvent having a relatively high moisture absorption property as compared with the glycol ether dialkyl. Therefore, for example, a content of the glycol ether monoalkyl contained in the maintenance liquid is not particularly limited, and is preferably 90 mass% or less, more preferably 70 mass% or less, even more preferably 50 mass% or less, even more preferably 45 mass% or less, even more preferably 35 mass% or less, and still even more preferably 15 mass% or less of the total amount of the maintenance liquid.

In order to make the maintenance liquid containing moisture as less as possible, it is preferable to dry the organic solvent in advance when producing the maintenance liquid. By drying the organic solvent in advance, the moisture content contained in the maintenance liquid can be reduced. Especially, the glycol ether monoalkyl having an -OH group has a high moisture absorption property and absorbs the moisture in the atmosphere, and thus it is particularly preferable to dry the glycol ether monoalkyl in advance. Examples of a method for drying the organic solvent include a method of spraying an inert gas (for example, a nitrogen gas) for a predetermined period of time, in which the organic solvent is dried in an inert gas atmosphere such as nitrogen, a method of distilling and refining the organic solvent, a method of permeating the organic solvent through a semi-permeable membrane that selectively permeates water, and a method of selectively adsorbing water mixed in the organic solvent with a water adsorbent that adsorbs water.

### <<1-2. Maintenance Liquid according to Second Embodiment>>

The maintenance liquid according to the present embodiment is a maintenance liquid for use in an inkjet recording device.

The maintenance liquid according to the present embodiment contains an organic solvent A2, and the organic solvent A2 has a volatilization rate, upon volatilization by means of a storage test described below, of 15 mass% or less.

Storage test: a low-density polyethylene tube is filled with the organic solvent A2, sealed, and stored at 50°C for one week.

Such a maintenance liquid containing the organic solvent A2 can prevent volatilization in a plastic container and a plastic supply body in the inkjet recording device, and thus has a high moisture retaining property.

As the low-density polyethylene tube used for the storage test, for example, a low-density polyethylene tube made by cutting a polyethylene tube hose (model number: 6-608-03, inner diameter: 3 mm, outer diameter: 5 mm) manufactured by AS ONE CORPORATION into 12 cm pieces can be used.

Note that in the present description, the plastic container means a plastic container that holds the maintenance liquid, and the plastic supply body means a plastic supply body that supplies the maintenance liquid. For example, the plastic container is a cartridge that holds the maintenance liquid, and the plastic supply body is a plastic tube that connects the cartridge and the inkjet head. Note that the terms "plastic container" and "plastic supply body" mean that plastic members are used for at least part of members constituting the plastic container and the plastic supply body, and do not preclude the plastic container or the plastic supply body from containing members different from the plastic members.

A material of the plastic members constituting at least part of the plastic container and the plastic supply body is not particularly limited as long as the material is a resin, and examples of the material include a polyolefin resin, an ethylene propylene diene rubber, nylon, polyurethane, and PTFE. It is preferable to use a polyethylene-based resin or an ethylene propylene diene rubber, and among these, it is particularly preferable to use a low-density polyethylene-based resin.

Hereinafter, each component contained in the maintenance liquid according to the present embodiment will be described.

### [Organic Solvent A2]

The organic solvent A2 is a solvent having a volatilization rate, upon volatilization by means of a storage test described below, of 15 mass% or less.

Storage test: a low-density polyethylene tube is filled with the organic solvent A2, sealed, and stored at 50°C for one week.

The volatilization rate within such a sealed low-density polyethylene tube does not necessarily correlate with volatility parameters of the organic solvent itself, such as a boiling point, a flash point, or an enthalpy of vaporization. Permeability with respect to plastic differs depending on the type of the organic solvent, and the volatilization rate in a sealed low-density polyethylene tube is a parameter resulting from the permeability with respect to plastic, specifically a parameter resulting from a chemical structure, a molecular weight, compatibility, and the like of the organic solvent.

Examples of the organic solvent having a volatilization rate of 15 mass% or less, upon the volatilization by means of such a storage test, include at least one selected from the group consisting of glycol ether monoalkyl, a cyclic ester, a carbonate ester, and an amide-based solvent. Examples of the organic solvent include: glycol ether monoalkyl such as dipropylene glycol monomethyl ether (volatilization rate is 10 mass%), tripropylene glycol monomethyl ether (volatilization rate is 8 mass%), and diethylene glycol monoethyl ether (volatilization rate is 8 mass%); an amide-based solvent such as N,N-diethylformamide (volatilization rate is 11 mass%), N,N-diethylpropanamide (volatilization rate is 12 mass%), and N,N-diethylacetamide (volatilization rate is 13 mass%); a carbonate ester such as propylene carbonate (volatilization rate is 1 mass%); a cyclic ester such as γ-butyrolactone (volatilization rate is 6 mass%) and ε-caprolactone (3 mass%); and an alcohol such as 3-methoxy-1-butanol (volatilization rate is 7 mass%). Among these, it is preferable to contain at least one selected from the group consisting of glycol ether monoalkyl, a cyclic ester, a carbonate ester, and an amide-based solvent, and it is more preferable to contain at least one selected from the group consisting of an amide-based solvent and a cyclic ester, and an amide-based solvent is particularly preferable.

The amide-based solvent refers to an organic solvent containing a compound having a -C(=O)-N- group (amide bond).

The amide-based solvent has an excellent balance between the volatility and the moisture retaining property in a sealed space inside a plastic tube. Therefore, by using the amide-based solvent as the organic solvent A2, the maintenance liquid has an excellent moisture retaining property in the plastic container and the plastic supply body in the inkjet recording device, and also has an excellent drying property. With such a maintenance liquid having an excellent drying property, it is possible to quickly remove the maintenance liquid from the inkjet recording device after cleaning, and it is also possible to quickly reuse the inkjet recording device.

Further, with such a maintenance liquid containing the amide-based solvent, it is possible to improve the cleaning property of the maintenance liquid, and the member suitability with respect to the inkjet recording device is also improved.

Examples of the amide-based solvent can include an alkylamide-based solvent composed of hydrogen or an alkyl group and a -C(=O)-N- group, which is a compound having an alkyl group (CₙH₂ₙ₊₁-) and a -C(=O)-N- group (amide bond) . By using the alkylamide-based solvent as the amide-based solvent, the maintenance liquid can exhibit the above-mentioned effects more effectively.

The alkylamide-based solvent is preferably an organic solvent composed only of hydrogen or an alkyl group and a - C(=O)-N- group without an alkoxy group, and for example, an alkylamide-based solvent having the following structure can be preferably used. 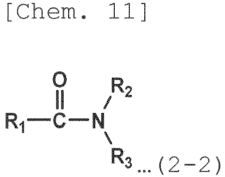 (In the formula (2-2), R₁ represents hydrogen or an alkyl group having 1 or more and 4 or less carbon atoms, and R₂ and R₃ each independently represent hydrogen or an alkyl group having 1 or more and 4 or less carbon atoms).

Each of R₂ and R₃ in the formula (2-2) is preferably an alkyl group having 1 to 4 carbon atoms, and more preferably an alkyl group having 2 to 4 carbon atoms.

Specific examples of the alkylamide-based solvent include, among N,N-diethylformamide, N,N-diethylacetamide, N,N-dipropylformamide, N,N-dibutylformamide, N,N-diethylpropanamide, N,N-dipropylpropanamide, N-ethylformamide, N-ethylacetamide, and the like, those having a volatilization rate of 15 mass% or less under predetermined conditions in a sealed low-density polyethylene tube. Among these, from a viewpoint of particularly exhibiting the effects of the present invention, it is preferable to contain at least one selected from the group consisting of N,N-diethylformamide, N,N-diethylpropanamide, and N,N-diethylacetamide. Among these, it is particularly preferable to contain N,N-diethylformamide.

The cyclic ester is a solvent having a cyclic ester structure. By containing the cyclic ester, the cleaning property of the maintenance liquid can be improved.

For example, as the cyclic ester, a cyclic ester having the following structure can be preferably used.

### [Chem. 12]

(In the formula (2-1), R₆ represents an alkylene group having 3 or more and 5 or less carbon atoms, and R₇ represents hydrogen or an alkyl group having 1 or more and 2 or less carbon atoms).

Among these, R₆ is preferably 4 or more and 5 or less, and more preferably 5. With such a maintenance liquid containing the lactone-based solvent, the member suitability with respect to the members constituting the inkjet recording device is further improved. In addition, the moisture retaining property also can be further improved. With such a maintenance liquid having a moisture retaining property, volatilization of the maintenance liquid in the inkjet recording device can be prevented, and thus precipitation of a solid component derived from an ink composition due to the volatilization of the maintenance liquid after cleaning can be prevented.

Examples of such a lactone-based solvent can include, among lactone-based solvents having a 6-membered or higher membered ring, such as δ-valerolactone, δ-hexanolactone, ε-caprolactone, δ-valerolactone, δ-hexalactone, δ-heptalactone, δ-octalactone, δ-nonalactone, δ-decalactone, and δ-undecalactone, those having a volatilization rate of 15 mass% or less under predetermined conditions in a sealed low-density polyethylene tube.

The organic solvent A2 may contain an organic solvent other than the amide-based solvent and lactone-based solvent described above. Specific examples of the organic solvent include, among glycol ether monoalkyl, a carbonate ester, a lactate ester, acetate, an alcohol, those having a volatilization rate of 15 mass% or less under predetermined conditions in a sealed low-density polyethylene tube.

Regarding a content of the organic solvent A2 with respect to the total amount of the maintenance liquid, a lower limit of the content of the organic solvent A2 is preferably in a range of 1 mass% or more, more preferably 5 mass% or more, even more preferably 10 mass% or more, and still even more preferably 15 mass% or more with respect to the total amount of the maintenance liquid. An upper limit of the content of the organic solvent A2 is preferably in a range of 95 mass% or less, more preferably in a range of 90 mass% or less, and even more preferably in a range of 85 mass% or less with respect to the total amount of the maintenance liquid.

### [Other Organic Solvents]

The organic solvent may contain other organic solvents other than the organic solvent A2 described above. Specific examples of the other organic solvents include organic solvents that do not correspond to solvents having a volatilization rate of 15 mass% or less in a storage test, which are general organic solvents, including: alkylene glycol monoalkyl ethers such as ethylene glycol mono-n-butyl ether, ethylene glycol mono-isobutyl ether, ethylene glycol mono-t-butyl ether, ethylene glycol mono-2-ethylhexyl ether, diethylene glycol monomethyl (or ethyl, propyl, isopropyl, n-butyl, isobutyl, t-butyl, 2-ethylhexyl) ether, triethylene glycol monomethyl (or ethyl, propyl, isopropyl, n-butyl, isobutyl, t-butyl, 2-ethylhexyl) ether, tetraethylene glycol monomethyl ether, propylene glycol mono-n-butyl ether, propylene glycol mono-isobutyl ether, propylene glycol mono-t-butyl ether, propylene glycol mono-2-ethylhexyl ether, dipropylene glycol monomethyl (or ethyl, propyl, isopropyl, n-butyl, isobutyl, t-butyl, 2-ethylhexyl) ether, tripropylene glycol monomethyl (or ethyl, propyl, isopropyl, n-butyl, isobutyl, t-butyl) ether, and tetrapropylene glycol monomethyl (or ethyl, propyl, isopropyl, n-butyl, isobutyl, t-butyl, 2-ethylhexyl) ether; dialkyl ethers of a polyhydric alcohol such as ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, dipropylene glycol methyl butyl ether, tripropylene glycol dimethyl ether, tripropylene glycol diethyl ether, and tripropylene glycol ethyl methyl ether; lactones such as γ-butyrolactone, δ-valerolactone, δ-hexanolactone, ε-caprolactone, γ-valerolactone, γ-hexalactone, γ-heptalactone, γ-octalactone, γ-nonalactone, γ-decalactone, γ-undecalactone, δ-heptalactone, δ-octalactone, δ-nonalactone, δ-decalactone, and δ-undecalactone; carbonate esters such as propylene carbonate and ethylene carbonate; an oxazolidinone-based solvent such as 3-methyl-2-oxazolidinone, 3-ethyl-2-oxazolidinone, and N-vinylmethyloxazolidinone; an acetate-based solvent such as triethylene glycol butyl ether acetate, ethylene glycol butyl ether acetate, diethylene glycol ethyl ether acetate, diethylene glycol methyl ether acetate, diethylene glycol butyl ether acetate, propylene glycol methyl ether acetate, dipropylene glycol methyl ether acetate, 1-methoxy-2-propyl acetate, 2-methylbutyl acetate, 3-methoxybutyl ether acetate, and cyclohexyl acetate; a cyclic amide-based solvent such as N-methylcaprolactam, N-acetylcaprolactam, ε-caprolactam, N-vinylcaprolactam, 2-pyrrolidone, N-methyl-2-pyrrolidone, N-ethyl-2-pyrrolidone, N-propyl-2-pyrrolidone, N-ethyl-ε-caprolactam, N-propyl-ε-caprolactam, and N-methyl-ε-caprolactam; an alkoxyamide-based solvent such as 3-methoxypropanamide, 3-butoxypropanamide, N,N-dimethyl-3-methoxypropanamide, N,N-dibutyl-3-methoxypropanamide, N,N-dibutyl-3-butoxypropanamide, and N,N-dimethyl-3-butoxypropanamide; alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol, and n-pentanol; monovalent alcohols such as 3-methoxy-3-methyl-1-butanol, 3-methoxy-1-propanol, 1-methoxy-2-propanol, and 3-methoxy-n-butanol; ketones or keto alcohols such as acetone, methyl ethyl ketone, methyl-n-propyl ketone, methyl isopropyl ketone, methyl-n-butyl ketone, methyl isobutyl ketone, methyl-n-amyl ketone, methyl hexyl ketone, methyl isoamyl ketone, diethyl ketone, ethyl-n-propyl ketone, ethyl isopropyl ketone, ethyl-n-butyl ketone, ethyl isobutyl ketone, di-n-propyl ketone, diisobutyl ketone, cyclopentanone, cyclohexanone, methylcyclohexanone, isophorone, and acetyl ketone; ethers such as tetrahydrofuran and dioxane; oxyethylene or oxypropylene copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, 1,2,6-hexanetriol; tetrahydric alcohols such as mesoerythritol and pentaerythritol; alkanolamines such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine; acetate esters such as methyl acetate, ethyl acetate, n-propyl acetate, isopropyl acetate, n-butyl acetate, isobutyl acetate, hexyl acetate, and octyl acetate; lactate esters such as methyl lactate, ethyl lactate, butyl lactate, propyl lactate, ethylhexyl lactate, amyl lactate, and isoamyl lactate; dibasic esters such as dimethyl oxalate, diethyl oxalate, dimethyl malonate, diethyl malonate, dipropyl malonate, dimethyl succinate, diethyl succinate, dimethyl glutarate, and diethyl glutarate; saturated hydrocarbons such as n-hexane, isohexane, n-nonane, isononane, dodecane, and isododecane; unsaturated hydrocarbons such as 1-hexene, 1-heptene, and 1-octene; cyclic saturated hydrocarbons such as cyclohexane, cycloheptane, cyclooctane, cyclodecane, and decalin; cyclic unsaturated hydrocarbons such as cyclohexene, cycloheptene, cyclooctene, 1,1,3,5,7-cyclooctatetraene, and cyclododecene; aromatic hydrocarbons such as benzene, toluene, and xylene; morpholines such as N-methylmorpholine, N-ethylmorpholine, and N-formylmorpholine; and a terpene-based solvent. It is preferable to select a solvent having an appropriate HLB value according to a resin, a dispersant, and the like to be combined.

A content of the other organic solvents is not particularly limited, and a lower limit of the content of the other organic solvents is preferably in a range of 10 mass% or more, more preferably in a range of 20 mass% or more, and even more preferably in a range of 30 mass% or more of the total amount of the maintenance liquid. An upper limit of the content of the other organic solvents is preferably in a range of 90 mass% or less, more preferably in a range of 85 mass% or less, and even more preferably in a range of 80 mass% or less of the total amount of the maintenance liquid.

The maintenance liquid according to the present embodiment is desirably a non-aqueous maintenance liquid that does not intentionally contain water. The non-aqueous maintenance liquid refers to a maintenance liquid that does not intentionally contain water, except for moisture in the atmosphere and water that is unavoidably contained due to additives, and the like, and contains an organic solvent, and is different from an aqueous maintenance liquid made from water or a mixed liquid of water and an organic solvent.

Note that a moisture content in the maintenance liquid according to the present embodiment is preferably 5.0 mass% or less, more preferably 3.0 mass% or less, even more preferably 1.0 mass% or less, and still even more preferably 0.5 mass% or less of the total amount of the maintenance liquid. The maintenance liquid according to the present embodiment is suitable for an inkjet recording device that performs recording using a non-aqueous ink composition. Therefore, when the maintenance liquid is mixed with moisture derived from raw materials or moisture in the atmosphere during a production process, solids may be generated due to a component contained in the non-aqueous ink composition when the maintenance liquid is used. By reducing the moisture content in the maintenance liquid so that the maintenance liquid contains moisture as less as possible (does not intentionally contain moisture), it is possible to more effectively improve the stability and the like of the inkjet recording device.

### [Colorant]

The maintenance liquid according to the present embodiment may contain a colorant. By containing a colorant, it is possible to prevent member corrosion by the organic solvent contained in the maintenance liquid, thereby improving the member suitability. The colorant is not particularly limited, and may be a dye-based colorant or a pigment-based colorant, and from a viewpoint of precipitation of the colorant in the maintenance liquid, an organic pigment is preferable. A pigment that can be used in the maintenance liquid according to the present embodiment is not particularly limited, and examples of the pigment include organic pigments used in ink compositions in the related art. These may be used alone or may be used in combination of two or more thereof. The maintenance liquid according to the present embodiment may not contain a colorant.

When a pigment is used in the maintenance liquid according to the present embodiment, dispersion stability of the pigment can be improved by using a dispersant or a dispersion aid (pigment derivative) described later. Specific organic pigments are the same as the specific organic pigments contained in the maintenance liquid according to the first embodiment described above. Color index (C.I.) numbers of the specific organic pigments are also the same as those contained in the maintenance liquid according to the first embodiment.

A content of the colorant is not particularly limited, and a lower limit of the content of the colorant is preferably in a range of 0.0005 mass% or more, more preferably in a range of 0.001 mass% or more, and even more preferably in a range of 0.005 mass% or more of the total amount of the maintenance liquid. An upper limit of the content of the colorant is preferably in a range of 1.0 mass% or less, more preferably in a range of 0.5 mass% or less, and even more preferably in a range of 0.3 mass% or less of the total amount of the maintenance liquid. The same applies to a content of a colorant contained in the maintenance liquid according to the third embodiment, which will be described later.

Note that it is also preferable that the maintenance liquid according to the present embodiment does not contain a colorant. Since it is possible to reduce the possibility that the colorant contained in the maintenance liquid precipitates as a solid content, it is possible to improve the cleaning property of the maintenance liquid. The same applies to the maintenance liquid according to the third embodiment, which will be described later.

### [Dispersant]

The maintenance liquid according to the present embodiment may contain a dispersant. As a result, it is possible to effectively disperse the component derived from the ink composition, and it is possible to improve the cleaning property of the maintenance liquid. Specific dispersants are the same as the specific dispersants contained in the maintenance liquid according to the first embodiment described above. A preferable content of the dispersant is the same as the preferable content of the dispersant contained in the maintenance liquid according to the first embodiment described above.

### [Dispersion Aid]

A dispersion aid may be used in the maintenance liquid according to the present embodiment, if necessary.

### [Surfactant]

In the maintenance liquid according to the present embodiment, a surfactant may be added for the purpose of reducing volatilization of the maintenance liquid in devices such as a nozzle portion and the inside of a tube, preventing solidification of such a maintenance liquid, or exhibiting redissolvability when the maintenance liquid solidifies, or for the purpose of reducing a surface tension and improving the cleaning property of the maintenance liquid. Specific surfactants are the same as the specific surfactants contained in the maintenance liquid according to the first embodiment described above.

The surfactant is not limited to those described above, an anionic surfactant, a cationic surfactant, an amphoteric surfactant, or a nonionic surfactant may be used, and may be appropriately selected according to an addition purpose.

### [Other Components]

The maintenance liquid according to the present embodiment may contain, as optional components, known additives such as a light stabilizer such as an antioxidant or an ultraviolet absorber, an epoxide, a polycarboxylic acid, a surface conditioner, a slip agent, a leveling agent (acrylic-based leveling agent or silicone-based leveling agent), an antifoaming agent, a pH adjuster, a bactericide, a preservative, a deodorant, a charge adjuster, a wetting agent, a pigment, and an extender pigment.

### <<1-3. Maintenance Liquid according to Third Embodiments

The maintenance liquid according to the present embodiment is a maintenance liquid for use in an inkjet recording device provided with an inkjet head including a resin cured product as a component member.

The "resin cured product" refers to a cured product of a curable resin. The resin cured product is not particularly limited as long as it is a cured product of a curable resin, and examples of the resin cured product include: a thermosetting resin such as an epoxy resin, a silicon resin, a phenol resin, a melamine resin, a urea resin, an unsaturated polyester resin, an alkyd resin, and a polyurethane resin; and a photocurable resin containing an ethylenic double bond. Among these, it is preferable to contain at least an epoxy resin and/or a silicon resin.

The maintenance liquid according to the present embodiment contains an organic solvent, and the organic solvent includes an organic solvent A3 described later.

Organic solvent A3: at least one selected from the group consisting of an alkylamide-based solvent (a1), a cyclic amide-based solvent (a2), and a lactone-based solvent (a3).

Such a maintenance liquid containing the organic solvent A3 has high member suitability with respect to the resin cured product, and an excellent cleaning property.

Hereinafter, each component contained in the maintenance liquid according to the present embodiment will be described.

### [Organic Solvent]

The organic solvent has a function of cleaning clogging in the ink flow path. This organic solvent contains the organic solvent A3 (at least one selected from the group consisting of the alkylamide-based solvent (a1), the cyclic amide-based solvent (a2), and the lactone-based solvent (a3)).

### [Organic Solvent A3]

The organic solvent A3 is at least one selected from the group consisting of the alkylamide-based solvent (a1), the cyclic amide-based solvent (a2), and the lactone-based solvent (a3). By containing the organic solvent A3, the cleaning property of the maintenance liquid can be improved.

### (1) Alkylamide-based Solvent

The alkylamide-based solvent is an organic solvent containing a compound composed of hydrogen or an alkyl group and a -C(=O)-N- group. By containing the alkylamide-based solvent, the cleaning property of the maintenance liquid can be improved.

The alkylamide-based solvent (a1) is preferably an organic solvent composed of hydrogen or an alkyl group and a - C(=O)-N- group without an alkoxy group, and for example, an alkylamide-based solvent having the following structure can be preferably used. 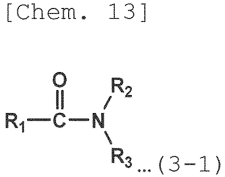 (In the formula (3-1), R₁ represents hydrogen or an alkyl group having 1 or more and 4 or less carbon atoms, and R₂ and R₃ each independently represent hydrogen or an alkyl group having 1 or more and 4 or less carbon atoms).

Note that each of R₂ and R₃ in the formula (3-1) is preferably an alkyl group having 1 to 4 carbon atoms, and more preferably an alkyl group having 2 to 4 carbon atoms.

By containing such an alkylamide-based solvent, not only the cleaning property of the maintenance liquid is improved, but also the member suitability with respect to the resin cured product is improved.

Specific examples of the alkylamide-based solvent include N,N-diethylformamide, N,N-diethylacetamide, N,N-dipropylformamide, N,N-dibutylformamide, N,N-diethylpropanamide, N,N-dipropylpropanamide, N-ethylformamide, and N-ethylacetamide. Among these, from a viewpoint of particularly exhibiting the effects of the present invention, it is preferable to contain at least one selected from the group consisting of N,N-diethylformamide, N,N-diethylpropanamide, and N,N-diethylacetamide. Among these, it is particularly preferable to contain N,N-diethylformamide.

A content of the alkylamide-based solvent is not particularly limited, and a lower limit of the content of the alkylamide-based solvent is preferably in a range of 1 mass% or more, more preferably in a range of 5 mass% or more, even more preferably in a range of 10 mass% or more, and still even more preferably in a range of 15 mass% or more of the total amount of the maintenance liquid.

An upper limit of the content of the alkylamide-based solvent is preferably in a range of 90 mass% or less, more preferably in a range of 80 mass% or less, and even more preferably in a range of 70 mass% or less of the total amount of the maintenance liquid.

### (2) Cyclic Amide-based Solvent

The cyclic amide-based solvent is an organic solvent containing a compound having a cyclic structure and having a - C(=O)-N- group in the cyclic structure. By containing the cyclic amide-based solvent, the cleaning property of the maintenance liquid can be improved.

For example, a cyclic amide-based solvent having the following structure can be preferably used. 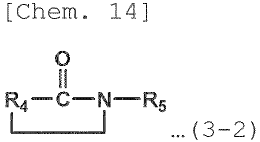 (In the formula (3-2), R₄ represents an alkylene group having 3 or more 5 or less carbon atoms, and R₅ represents hydrogen or an alkyl group or an unsaturated hydrocarbon group having 1 or more and 4 or less carbon atoms).

The unsaturated hydrocarbon group refers to a hydrocarbon group containing at least one or more multiple bonds, such as a vinyl group.

Note that R₅ is preferably hydrogen or an alkyl group or an unsaturated hydrocarbon group having 1 to 3 carbon atoms, and is preferably hydrogen or an alkyl group or an unsaturated hydrocarbon group having 1 to 2 carbon atoms.

R₄ is preferably an alkylene group having 4 or more and 5 or less carbon atoms.

By containing such a cyclic amide-based solvent, not only the cleaning property of the maintenance liquid is improved, but also the member suitability with respect to the resin cured product is improved.

Specific examples of the cyclic amide-based solvent include 3-methyl-2-oxazolidinone, 3-ethyl-2-oxazolidinone, N-vinylmethyloxazolidinone, N-methylcaprolactam, N-ethylcaprolactam, N-propylcaprolactam, N-acetylcaprolactam, ε-caprolactam, N-vinylcaprolactam, 2-pyrrolidone, N-methyl-2-pyrrolidone, N-ethyl-2-pyrrolidone, and N-propyl-2-pyrrolidone. Among these, it is preferable to contain at least one selected from the group consisting of ε-caprolactam, N-methylcaprolactam, and N-vinylcaprolactam.

A content of the cyclic amide-based solvent is not particularly limited, and a lower limit of the content of the cyclic amide-based solvent is preferably in a range of 1 mass% or more, more preferably in a range of 3 mass% or more, and even more preferably in a range of 10 mass% or more of the total amount of the maintenance liquid.

An upper limit of the content of the cyclic amide-based solvent is preferably 90 mass% or less, more preferably 60 mass% or less, even more preferably 40 mass% or less, and still even more preferably 35 mass% or less of the total amount of the maintenance liquid.

### (3) Lactone-based Solvent

The lactone-based solvent is a solvent having a cyclic ester structure. By containing the lactone-based solvent, the cleaning property of the maintenance liquid can be improved.

As the lactone-based solvent, for example, a lactone-based solvent having the following structure can be preferably used. 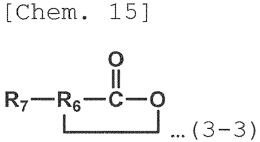 (In the formula (3-3), R₆ represents an alkylene group having 3 or more and 5 or less carbon atoms, and R₇ represents hydrogen or an alkyl group having 1 or more and 2 or less carbon atoms).

Among these, R₆ is preferably 4 or more and 5 or less, and more preferably 5. With such a maintenance liquid containing the lactone-based solvent, the member suitability with respect to the resin cured product is further improved.

Examples of such the lactone-based solvent include a lactone-based solvent having a 6-membered or higher membered ring, such as δ-valerolactone, δ-hexanolactone, ε-caprolactone, δ-valerolactone, δ-hexalactone, δ-heptalactone, δ-octalactone, δ-nonalactone, δ-decalactone, and δ-undecalactone.

A content of the lactone-based solvent (a3) is not particularly limited, a lower limit of the content of the lactone-based solvent is not particularly limited, and the lower limit of the content of the lactone-based solvent is preferably in a range of 1 mass% or more, more preferably in a range of 3 mass% or more, and even more preferably in a range of 10 mass% or more of the total amount of the maintenance liquid.

An upper limit of the content of the lactone-based solvent is preferably 90 mass% or less, more preferably 60 mass% or less, even more preferably 40 mass% or less, and still even more preferably 35 mass% or less of the total amount of the maintenance liquid.

In the maintenance liquid according to the present embodiment, the organic solvent contains at least one selected from the group consisting of the alkylamide-based solvent (a1), the cyclic amide-based solvent (a2), and the lactone-based solvent (a3). Among these, it is preferable to contain at least one selected from the group consisting of the alkylamide-based solvent (a1) and the cyclic amide-based solvent (a2), and it is more preferable to contain the alkylamide-based solvent (a1). As a result, the maintenance liquid according to the present embodiment not only exhibits the effects of the present invention particularly effectively, but also has an excellent drying property. With such a maintenance liquid having an excellent drying property, it is possible to quickly remove the maintenance liquid from the inkjet recording device after cleaning, and it is also possible to quickly reuse the inkjet recording device.

Regarding a content of the organic solvent A3 with respect to the total amount of the maintenance liquid, a lower limit of the content of the organic solvent A3 is preferably in a range of 1 mass% or more, more preferably in a range of 5 mass% or more, even more preferably in a range of 10 mass% or more, and still even more preferably 15 mass% or more with respect to the total amount of the maintenance liquid.

An upper limit of the content of the organic solvent A3 is preferably in a range of 95 mass% or less, more preferably in a range of 90 mass% or less, and even more preferably in a range of 85 mass% or less with respect to the total amount of the maintenance liquid.

### [Other Organic Solvents]

The organic solvent may contain other organic solvents other than the organic solvent A3 described above. Specific examples of the other organic solvents include general organic solvents, including: alkylene glycol monoalkyl ethers such as ethylene glycol mono-n-butyl ether, ethylene glycol mono-isobutyl ether, ethylene glycol mono-t-butyl ether, ethylene glycol mono-2-ethylhexyl ether, diethylene glycol monomethyl (or ethyl, propyl, isopropyl, n-butyl, isobutyl, t-butyl, 2-ethylhexyl ether, triethylene glycol monomethyl (or ethyl, propyl, isopropyl, n-butyl, isobutyl, t-butyl, 2-ethylhexyl) ether, tetraethylene glycol monomethyl ether, propylene glycol mono-n-butyl ether, propylene glycol mono-isobutyl ether, propylene glycol mono-t-butyl ether, propylene glycol mono-2-ethylhexyl ether, dipropylene glycol monomethyl (or ethyl, propyl, isopropyl, n-butyl, isobutyl, t-butyl, 2-ethylhexyl) ether, tripropylene glycol monomethyl (or ethyl, propyl, isopropyl, n-butyl, isobutyl, t-butyl) ether, and tetrapropylene glycol monomethyl ether (or ethyl, propyl, isopropyl, n-butyl, isobutyl, t-butyl, 2-ethylhexyl); dialkyl ethers of a polyhydric alcohol such as ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, dipropylene glycol methyl butyl ether, tripropylene glycol dimethyl ether, tripropylene glycol diethyl ether, and tripropylene glycol ethyl methyl ether; lactones such as γ-butyrolactone, γ-valerolactone, γ-hexalactone, γ-heptalactone, γ-octalactone, γ-nonalactone, γ-decalactone, and γ-undecalactone; carbonate esters such as propylene carbonate and ethylene carbonate; an acetate-based solvent such as triethylene glycol butyl ether acetate, ethylene glycol butyl ether acetate, diethylene glycol ethyl ether acetate, diethylene glycol methyl ether acetate, diethylene glycol butyl ether acetate, propylene glycol methyl ether acetate, dipropylene glycol methyl ether acetate, 1-methoxy-2-propyl acetate, 2-methylbutyl acetate, 3-methoxybutyl ether acetate, and cyclohexyl acetate; an alkoxyamide-based solvent such as 3-methoxypropanamide, 3-butoxypropanamide, N,N-dimethyl-3-methoxypropanamide, N,N-dibutyl-3-methoxypropanamide, N,N-dibutyl-3-butoxypropanamide, and N,N-dimethyl-3-butoxypropanamide; alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol, and n-pentanol; monovalent alcohols such as 3-methoxy-3-methyl-1-butanol, 3-methoxy-1-propanol, 1-methoxy-2-propanol, and 3-methoxy-n-butanol; ketones or keto alcohols such as acetone, methyl ethyl ketone, methyl-n-propyl ketone, methyl isopropyl ketone, methyl-n-butyl ketone, methyl isobutyl ketone, methyl-n-amyl ketone, methyl hexyl ketone, methyl isoamyl ketone, diethyl ketone, ethyl-n-propyl ketone, ethyl isopropyl ketone, ethyl-n-butyl ketone, ethyl isobutyl ketone, di-n-propyl ketone, diisobutyl ketone, cyclopentanone, cyclohexanone, methylcyclohexanone, isophorone, and acetyl ketone; ethers such as tetrahydrofuran and dioxane; oxyethylene or oxypropylene copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, 1,2,6-hexanetriol; tetrahydric alcohols such as mesoerythritol and pentaerythritol; alkanolamines such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine; acetate esters such as methyl acetate, ethyl acetate, n-propyl acetate, isopropyl acetate, n-butyl acetate, isobutyl acetate, hexyl acetate, and octyl acetate; lactate esters such as methyl lactate, ethyl lactate, butyl lactate, propyl lactate, ethylhexyl lactate, amyl lactate, and isoamyl lactate; dibasic esters such as dimethyl oxalate, diethyl oxalate, dimethyl malonate, diethyl malonate, dipropyl malonate, dimethyl succinate, diethyl succinate, dimethyl glutarate, and diethyl glutarate; saturated hydrocarbons such as n-hexane, isohexane, n-nonane, isononane, dodecane, and isododecane; unsaturated hydrocarbons such as 1-hexene, 1-heptene, and 1-octene; cyclic saturated hydrocarbons such as cyclohexane, cycloheptane, cyclooctane, cyclodecane, and decalin; cyclic unsaturated hydrocarbons such as cyclohexene, cycloheptene, cyclooctene, 1,1,3,5,7-cyclooctatetraene, and cyclododecene; aromatic hydrocarbons such as benzene, toluene, and xylene; morpholines such as N-methylmorpholine, N-ethylmorpholine, and N-formylmorpholine; and a terpene-based solvent. It is preferable to select a solvent having an appropriate HLB value according to a resin, a dispersant, and the like to be combined.

A content of the other organic solvents is not particularly limited, and a lower limit of the content of the other organic solvents is preferably in a range of 10 mass% or more, more preferably in a range of 20 mass% or more, and even more preferably in a range of 30 mass% or more of the total amount of the maintenance liquid. An upper limit of the content of the other organic solvents is preferably in a range of 90 mass% or less, more preferably in a range of 85 mass% or less, and even more preferably in a range of 80 mass% or less of the total amount of the maintenance liquid.

Further, it is preferable that the maintenance liquid according to the present embodiment contains an organic solvent having a boiling point of 250°C or higher. By containing an organic solvent having a boiling point of 250°C or higher, it is possible to reduce a content of volatile organic compounds in the maintenance liquid, thereby reducing an environmental load. Further, the moisture retaining property of the maintenance liquid can be improved. A lower limit of a content of the organic solvent having a boiling point of 250°C or higher is preferably in a range of 5 mass% or more, more preferably in a range of 10 mass% or more, and even more preferably in a range of 15 mass% or more of the total amount of the maintenance liquid. An upper limit of the content of the organic solvent having a boiling point of 250°C or higher is preferably in a range of 30 mass% or less, more preferably in a range of 25 mass% or less, and even more preferably in a range of 20 mass% or less of the total amount of the maintenance liquid. Examples of the organic solvent having a boiling point of 250°C or higher include triethylene glycol monobutyl ether (boiling point: 278°C), tetraethylene glycol monobutyl ether (boiling point: 304°C), and the like.

### [Colorant]

The maintenance liquid according to the present embodiment may contain a colorant. By containing a colorant, it is possible to prevent member corrosion by the organic solvent contained in the maintenance liquid, thereby improving the member suitability. Especially, the maintenance liquid according to the present embodiment contains the organic solvent A3, thereby having high member suitability with respect to the resin cured product and an excellent cleaning property. Therefore, by further containing a colorant, the member suitability with respect to the resin cured product can be further improved.

The colorant is not particularly limited, and may be a dye-based colorant or a pigment-based colorant, and from a viewpoint of dispersibility in the maintenance liquid, a pigment is preferable. A pigment that can be used in the maintenance liquid according to the present embodiment is not particularly limited, and examples of the pigment include organic pigments used in ink compositions in the related art. These may be used alone or may be used in combination of two or more thereof. Note that the maintenance liquid according to the present embodiment may not contain a colorant.

When a pigment is used in the maintenance liquid according to the present embodiment, dispersion stability of the pigment can be improved by using a dispersant or a dispersion aid (pigment derivative) described later. Specific organic pigments are the same as the specific organic pigments contained in the maintenance liquid according to the first embodiment described above. Color index (C.I.) numbers of the specific organic pigments are also the same as those contained in the maintenance liquid according to the first embodiment. A preferable content of the colorant is the same as the preferable content of the colorant contained in the maintenance liquid according to the second embodiment described above.

### [Dispersant]

The maintenance liquid according to the present embodiment may contain a dispersant. As a result, it is possible to effectively disperse the component derived from the ink composition, and it is possible to improve the cleaning property of the maintenance liquid. Especially, the maintenance liquid according to the present embodiment contains the organic solvent A3, thereby having high member suitability with respect to the resin cured product and an excellent cleaning property. Therefore, by containing a dispersant, the cleaning property of the maintenance liquid can be further improved. Specific dispersants are the same as the specific dispersants contained in the maintenance liquid according to the first embodiment described above. A preferable content of the dispersant is the same as the preferable content of the dispersant contained in the maintenance liquid according to the first embodiment described above.

### [Dispersion Aid]

A dispersion aid may be used in the maintenance liquid according to the present embodiment, if necessary.

### [Surfactant]

In the maintenance liquid according to the present embodiment, a surfactant may be added for the purpose of reducing volatilization of the maintenance liquid in devices such as a nozzle portion and the inside of a tube, preventing solidification of such a maintenance liquid, or exhibiting redissolvability when the maintenance liquid solidifies, or for the purpose of reducing a surface tension and improving the cleaning property of the maintenance liquid. Specific surfactants are the same as the specific surfactants contained in the maintenance liquid according to the first embodiment described above.

The surfactant is not limited to those described above, an anionic surfactant, a cationic surfactant, an amphoteric surfactant, or a nonionic surfactant may be used, and may be appropriately selected according to an addition purpose.

### [Other Components]

The maintenance liquid according to the present embodiment may contain, as optional components, known additives such as a light stabilizer such as an antioxidant and an ultraviolet absorber, an epoxide, a polycarboxylic acid, a surface conditioner, a slip agent, a leveling agent (acrylic-based leveling agent or silicone-based leveling agent), an antifoaming agent, a pH adjuster, a bactericide, a preservative, a deodorant, a charge adjuster, a wetting agent, a pigment, and an extender pigment.

### <<2. Maintenance method>>

A maintenance method according to the present embodiment is a method of maintaining an inkjet recording device using the above-mentioned maintenance liquid. The maintenance liquid according to the first embodiment described above has high member suitability with respect to the members constituting the inkjet recording device and an excellent cleaning property. Therefore, also in a maintenance method of maintaining an inkjet recording device using this maintenance liquid, members constituting the inkjet recording device are less corroded.

The maintenance liquid according to the second embodiment described above has an excellent moisture retaining property in the plastic container and the plastic supply body in the inkjet recording device. Therefore, also in a maintenance method of maintaining an inkjet recording device using this maintenance liquid, it is possible to prevent a component derived from the ink composition, which has been cleaned, from precipitating again, so that effective washing becomes possible.

The maintenance liquid according to the third embodiment described above has high member suitability with respect to the resin cured product and an excellent cleaning property. Therefore, in a maintenance method of maintaining an inkjet recording device using this maintenance liquid, it is possible to prevent erosion of the resin cured product constituting an inkjet head and remove a component derived from an ink composition adhering to the inside of an ink flow path and the like.

Members in the inkjet recording device that come into contact with the ink composition are not particularly limited, and examples of the members include the ink flow path of the inkjet recording device, ink mist attachment positions in a head cap, a wiper, a flushing area, a platen, a nozzle plate, and a housing of the recording device. The maintenance liquid according to the second embodiment described above has an excellent moisture retaining property in the plastic container and the plastic supply body in the inkjet recording device. Therefore, even when the member that comes into contact with the maintenance liquid is a plastic member, it is possible to prevent volatilization of the maintenance liquid within the plastic member.

Examples of the ink flow path of the inkjet recording device include an ink composition accommodation container that stores the ink composition, a supply path (tube, damper, or the like) for supplying the ink composition from the ink composition accommodation container (ink cartridge, bottle, or the like), and a flow path for circulating the ink composition to the nozzle opening in the inkjet head.

Examples of the maintenance method according to the present embodiment include a method of circulating the above-mentioned maintenance liquid through the ink flow path of the inkjet recording device. Specific examples of the maintenance method include: a method of discharging the ink composition from the inkjet recording device filled with the ink composition, and then circulating the maintenance liquids according to the first, second, and third embodiments described above; a method of circulating the maintenance liquids according to the first, second, and third embodiments described above from an upstream of the ink flow path without discharging the ink composition from the inkjet recording device filled with the ink composition, and then discharging the ink composition; a method of discharging the maintenance liquid from the inkjet recording device filled with the maintenance liquids according to the first, second, and third embodiments, and then circulating the ink composition; and a method of circulating the ink composition from the upstream of the ink flow path without discharging the maintenance liquid from the inkjet recording device filled with the maintenance liquid, and then discharging the maintenance liquid.

The circulation and discharge of the maintenance liquids according to the first, second, and third embodiments described above may be performed using a normal cleaning operation of the inkjet recording device.

In addition, a maintenance method for the ink mist attachment positions in the head cap, wiper, flushing area, platen, nozzle plate, and housing of the inkjet recording device, and the like is not particularly limited, and examples of the maintenance method include, for example, a method in which the maintenance liquid is adhered to the member to which the ink composition adheres, and the maintenance liquid is wiped off as necessary. When wiping off, a wiping member (rubber-based wiping member or fiber-based wiping member) such as a wiper may be immersed in the maintenance liquid to wipe off the members to which the ink composition adheres, such as the nozzle opening of the inkjet head.
he maintenance liquid described above may be circulated in the ink flow path of the inkjet recording device by covering the nozzle opening of the inkjet head with a cap having a through-hole and generating a negative pressure in the cap with a suction pump that communicates with the through-hole via a tube.

### <<3. Inkjet Recording Device>>

A known inkjet recording device using the maintenance liquids according to the first, second, and third embodiments described above in the related art can be used. Note that these maintenance liquids may be passed through ink passages of the inkjet recording device according to the present embodiment, may be inkjet-discharged by the inkjet recording device according to the present embodiment, or may impregnate a wiping member (for example, a wiper) and then the wiping member is used to wipe the component members (for example, the nozzle opening of the inkjet head) of the inkjet recording device according to the present embodiment, as long as these maintenance liquids are used to remove the component derived from the ink composition.

Among these maintenance liquids, the maintenance liquid according to the second embodiment described above is preferable for an inkjet recording device including a plastic container and/or a plastic supply body. The maintenance liquid described above has an excellent moisture retaining property in a plastic container and a plastic supply body, and thus is preferable for an inkjet recording device including a plastic container and/or a plastic supply body, in which an interior of the inkjet recording device is in contact with the maintenance liquid.

A material of the plastic members constituting at least part of the plastic container and the plastic supply body is not particularly limited as long as the material is a resin, and examples of the material include a polyolefin resin, an ethylene propylene diene rubber, nylon, polyurethane, and PTFE. It is preferable to use a polyethylene-based resin or an ethylene propylene diene rubber, and among these, it is particularly preferable to use a low-density polyethylene-based resin.

The maintenance liquid according to the third embodiment described above has high member suitability with respect to a resin cured product and an excellent cleaning property. Therefore, by using the maintenance liquid by bringing the maintenance liquid into contact with the resin cured product of the inkjet head, corrosion of the resin cured product constituting the inkjet head is prevented, and the component derived from the ink composition adhering to the inside of the ink flow path, ink mist in the head cap, wiper, flushing area, platen, nozzle plate, and housing of the recording device, and the like can be removed.

FIG. 1 shows a schematic diagram showing an example of an inkjet head. An inkjet head 1 discharges a maintenance liquid supplied from an ink cartridge (maintenance liquid supply portion) from an ejection hole surface D.

In an inkjet recording device that ejects the maintenance liquid according to the third embodiment described above by an inkjet method, the resin cured product that constitutes the inkjet head is not particularly limited as long as it is a cured product of a curable resin, and examples of the resin cured product include: a thermosetting resin such as an epoxy resin, a silicon resin, a phenol resin, a melamine resin, an urea resin, an unsaturated polyester resin, an alkyd resin, and a polyurethane resin; and a photocurable resin containing an ethylenic unsaturated double bond. Among these, the resin cured product is preferable to contain at least an epoxy resin and/or a silicon resin. The epoxy resin and silicon resin have strong adhesive strength, and can firmly bond the component members of the inkjet head. An adhesive, which can be used as an adhesive for bonding the component members of the inkjet head and contains an epoxy resin will be described below.

A typical epoxy resin contained in the adhesive includes, for example, a bisphenol epoxy resin represented by the following structural formula (3-4), a phenol novolac epoxy resin represented by the following structural formula (3-5), or a cresol novolac epoxy resin represented by the following structural formula (3-6) (where n=0 to 10). 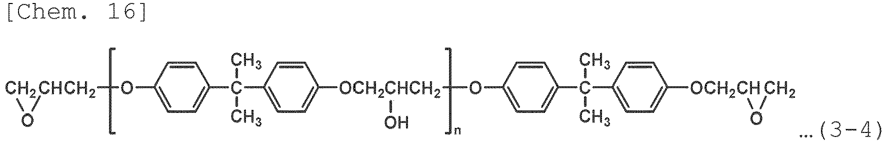 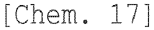 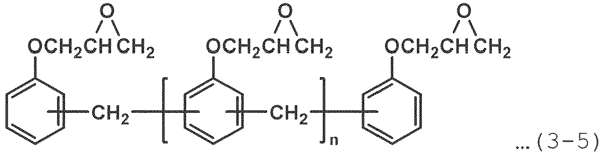 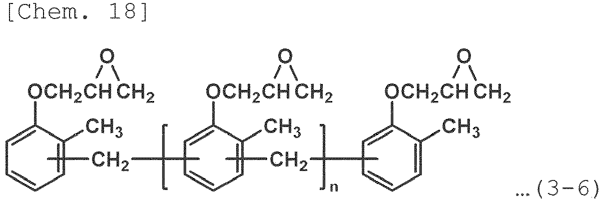 In addition to bisphenol A shown in the structural formula (3-4), a skeleton portion of the epoxy resin of the structural formula (3-4) may be a structure known as a main component of an epoxy resin adhesive in the related art, such as tetrabromobisphenol A, bisphenol F, bisphenol AD, and bisphenol 2.

The epoxy resin contained in the adhesive is not limited to the typical epoxy-based resins exemplified above, and any resin having an epoxy group in a side chain may be used.

By using a curing agent such as an amine-based curing agent, an acid anhydride-based curing agent, and a phenol-based curing agent together with the epoxy resin, it is possible to polymerize the epoxy resin and obtain a cured product.

When the adhesive contains the epoxy adhesive, a proportion of the epoxy resin contained in the cured product of the adhesive may be 10 mass% or more, and is preferably 30 mass% or more, more preferably 50 mass% or more, even more preferably 70 mass% or more, still even more preferably 90 mass% or more, and most preferably 99 mass% or more of a total amount of the cured adhesive. The silicon resin is a polymer having repeating siloxane bonds as a main chain and an alkyl group and aryl group as a side group, and is siloxane-based condensate. Examples of the silicon resin include "KE1831" manufactured by Shin-Etsu Chemical Co., Ltd.

The inkjet head for ejecting the maintenance liquid or the ink composition may be a piezo inkjet head using a piezoelectric element or a thermal inkjet head using a heating element, and is not particularly limited.

Among these, it is preferable that the inkjet recording device performs recording using a non-aqueous ink composition. The maintenance liquid described above contains at least one or more of an amide-based solvent and a lactone-based solvent, and can effectively remove components derived from the non-aqueous ink composition. Note that the non-aqueous ink composition refers to an ink composition containing an organic solvent produced without intentionally containing water, unlike an aqueous ink composition containing water as a main component.

### «4. Ink Composition»

The ink composition ejected by the inkjet recording device described above may be a known ink composition in the related art. Among these, the ink composition ejected by an inkjet recording device using the maintenance liquid described above is preferably a non-aqueous ink composition. Further, when the maintenance liquid contains at least one or more of the amide-based solvent and the lactone-based solvent described above, components derived from the non-aqueous ink composition can be effectively removed. Among these, a non-aqueous ink composition containing at least one or more of the amide-based solvent and the lactone-based solvent is particularly preferable.

### [Examples]

Hereinafter, the present invention will be described in more detail with reference to Examples, whereas the present invention is not limited to these descriptions.

### (First Embodiment)

### 1. Production of Maintenance Liquid

Maintenance liquids in Examples and Comparative Examples were produced by mixing components in proportions shown in Tables 1 to 5 below. The unit is mass%.

### 2. Production of Ink Composition

Ink compositions used for evaluation of the maintenance liquids were produced by mixing components in proportions shown in Table 6 below. The unit is mass%.

### 3. Moisture Absorption Test

For the maintenance liquids in Examples and Comparative Examples, a moisture absorption test was performed and a moisture absorption amount after the test was measured. Specifically, 1-liter bottles containing the maintenance liquids were put into a constant temperature bath (temperature: 25°C, humidity: 550), were placed in the constant temperature bath for 100 hours while gently stirring the maintenance liquids in a state where a lid of each bottle is opened, and a moisture content after placement was measured. A Karl Fischer Moisture Meter 901 (manufactured by Metrohm Japan Co., Ltd.) was used to measure the moisture content.

### 4. Evaluation

### (Cleaning Property)

The cleaning property (dissolubility) of the maintenance liquids in Examples and Comparative Examples were evaluated. Specifically, 0.5 g of the produced ink composition was placed in a glass petri dish, placed in an oven at 60°C, and heated for 2 hours to dry the ink composition, and components derived from the ink composition were precipitated. Then, the precipitated components were allowed to cool to 25°C, and 1.0 g of the maintenance liquids in Examples and Comparative Examples were dropped onto the solidified components derived from the ink composition, and the dissolubility (cleaning property) thereof was visually evaluated (indicated as cleaning property in the table).

### Evaluation Criteria

Evaluation 5: all the solidified components were dissolved, and no solidified components remained.
Evaluation 4: all the solidified components were dissolved, and almost no solidified components remained.
Evaluation 3: all the solidified components were dissolved, but some of the solidified components were not dissolved.
Evaluation 2: all the solidified components were dissolved, but most of the separated lumps were not dissolved.
Evaluation 1: the solidified components did not dissolve.

### (Aggregability)

Aggregability of the maintenance liquids in Examples and Comparative Examples were evaluated. Specifically, 20 g of the produced ink composition and 20 g of the maintenance liquids in Examples and Comparative Examples were mixed to obtain a mixed liquid. Then, the mixed liquid was sealed in a container at room temperature of 25°C and left for 5 days. After the mixed liquid was sufficiently shaken after leaving, 5 ml of the mixed liquid was filtered through a filter having a pore size of 10 um, and aggregates derived from the ink composition on the filter were observed (indicated as aggregability in the table).

### Evaluation Criteria

Evaluation 5: no aggregates were observed.
Evaluation 4: some aggregates were confirmed, but the liquid passed through without problems.
Evaluation 3: aggregates were confirmed, but liquid was passed through without problems.
Evaluation 2: a large amount of aggregates were confirmed, and poor liquid passing through occurred.
Evaluation 1: the total amount of liquid could not pass.

### (Member Suitability)

The member suitability (member suitability of the inkjet head) of the maintenance liquids in Examples and Comparative Examples were evaluated. Specifically, 0.2 g of a cured product obtained by drying an epoxy adhesive (two-liquid curing type epoxy adhesive "1500", manufactured by Cemedine Co., Ltd.) used for members of the inkjet head at 60°C for one day, immersed in the maintenance liquids in Examples and Comparative Examples, and left at 60°C for 1 week, and an immersion test was performed to measure a change in weight of the cured product (indicated as "member suitability" in the table).

### Evaluation Criteria

Evaluation 5: the weight change rate is less than 30, and the material of the epoxy adhesive does not deteriorate.
Evaluation 4: the weight change rate is 30 or more and less than 5%, and the material of the epoxy adhesive does not deteriorate.
Evaluation 3: the weight change rate is 50 or more and less than 10%, and the material of the epoxy adhesive does not deteriorate.
Evaluation 2: the weight change rate is 10% or more and less than 15%, and the material of the epoxy adhesive does not deteriorate.
Evaluation 1: the weight change rate is 15° or more and/or the material of the epoxy adhesive deteriorates.

### (Moisture Retaining Property)

The moisture retaining property of the maintenance liquids in Examples and Comparative Examples were evaluated. Specifically, an inkjet recording device (trade name: VersaArt RE-640, manufactured by Roland DG Co., Ltd.) including a cleaning system was used, and was filled with the produced ink composition to print a nozzle check pattern, and normal ejection of the ink composition from all nozzles was confirmed. Then, after the ink composition was discharged, the maintenance liquids in Examples and Comparative Examples were loaded and left at room temperature of 25°C and humidity of 60% for one month. After that, the maintenance liquids were discharged, and the produced ink composition was reloaded, and a cleaning operation was performed once, and a nozzle check pattern was printed again, and then the number of non-ejecting nozzles was counted (indicated as "moisture retaining property" in the table).

### Evaluation Criteria

Evaluation 5: the number of non-ejecting nozzles is 0.
Evaluation 4: the number of non-ejecting nozzles is 1 to 4.
Evaluation 3: the number of non-ejecting nozzles is 5 to 10.
Evaluation 2: the number of non-ejecting nozzles is 11 to 20.
Evaluation 1: the number of non-ejecting nozzles is 21 or more.

### (Left Cleaning Property)

A left cleaning property of the maintenance liquids in Examples and Comparative Examples were evaluated. Specifically, an inkjet recording device (trade name: VersaArt RE-640, manufactured by Roland DG Co., Ltd.) was used, and was filled with the produced ink composition to record a nozzle check pattern, and normal ejection of the ink composition from all nozzles was confirmed. After that, the maintenance liquids in Examples and Comparative Examples each of which was loaded in a 1L bottle with the bottle opened, and the inkjet recording device used for recording was left at room temperature of 25°C and humidity of 60% for one month, and a cleaning operation was performed once, and a nozzle surface was manually wiped with a cleaning stick dipped in the maintenance liquids, and then the nozzle check pattern was printed again, and the number of non-ejecting nozzles was counted (indicated as "left cleaning property" in the table).

### Evaluation Criteria

Evaluation 5: the number of non-ejecting nozzles is 0.
Evaluation 4: the number of non-ejecting nozzles is 1 to 4.
Evaluation 3: the number of non-ejecting nozzles is 5 to 10.
Evaluation 2: the number of non-ejecting nozzles is 11 to 20.
Evaluation 1: the number of non-ejecting nozzles is 21 or more.

**[Table 1]**

| | | | | Example 1-1 | Example 1-2 | Example 1-3 | Example 1-4 | Example 1-5 | Example 1-6 | Example 1-7 | Example 1-8 | Example 1-9 | Example 1-10 | Example 1-11 | Example 1-12 |
|---|---|---|---|---|---|---|---|---|---|---|---|---|---|---|---|
| Classification | Type | Name | EOV | | | | | | | | | | | | |
| Amide-based solvent | Alkylamide-based solvent | N,N-diethylformamide | 41.4 | 10.00 | | | | | | | | 5.00 | | 7.50 | 10.00 |
| | | N,N-diethylpropanamide | 43.1 | | 10.00 | | | | | | | | | | |
| | | N,N-diethylacetamide | 42.2 | | | 10.00 | | | | | | | | | |
| | | N,N-dimethylformamide | 39.0 | | | | 10.00 | | | | | | | | |
| | Cyclic amide-based solvent | N-methyl oxazolidinone | 50.4 | | | | | 10.00 | | | | | | | |
| tone-based sol\ | 5-membered ring | γ-butyrolactone | 44.0 | | | | | | 10.00 | | | | 5.00 | | |
| | 6-membered or higher membered ring | δ-valerolactone | 45.4 | | | | | | | 10.00 | | | | | |
| | | ε-caprolactone | 46.2 | | | | | | | | 10.00 | | | | |
| Glycol ether-based solvent | Glycol ether monoalkyl | Triethylene glycol monobutyl ether | 60.0 | | | | | | | | | 10.00 | 10.00 | 10.00 | 10.00 |
| | | Dipropylene glycol monomethyl ether | 51.1 | | | | | | | | | | | | |
| | | Tripropylene glycol monomethyl ether | 59.1 | | | | | | | | | | | | |
| | Glycol ether dialkyl | Diethylene glycol dibutyl ether | 47.2 | | | | | | | | | | | | |
| | | Diethylene glycol methyl ethyl ether | 38.8 | | | | | | | | | | | | |
| | | Diethylene glycol diethyl ether | 40.9 | 90.00 | 90.00 | 90.00 | 90.00 | 90.00 | 90.00 | 90.00 | 90.00 | 85.00 | 85.00 | 82.50 | 80.00 |
| | | Dipropylene glycol dimethyl ether | 39.8 | | | | | | | | | | | | |
| | Carbonate ester | Propylene carbonate | 47.8 | | | | | | | | | | | | |
| | Lactate ester | Methyl lactate | 44.5 | | | | | | | | | | | | |
| | Dibasic ester | Diethyl succinate | 45.5 | | | | | | | | | | | | |
| Surfactant | Polyether-modified | BYK-331 | | | | | | | | | | | | | |
| | Polyester-modified | BYK-313 | | | | | | | | | | | | | |
| Dispersant | Polycaprolactone-based | Soisperse32000 | | | | | | | | | | | | | |
| | | Solsperse33000 | | | | | | | | | | | | | |
| Pigment | Carbon black | | | | | | | | | | | | | | |
| | Cyan (PB15:4) | | | | | | | | | | | | | | |
| | Magenta (PR122) | | | | | | | | | | | | | | |
| | Yellow (PY155) | | | | | | | | | | | | | | |
| Total | | | | 100.00 | 100.00 | 100.00 | 100.00 | 100.00 | 100.00 | 100.00 | 100.00 | 100.00 | 100.00 | 100.00 | 100.00 |
| Moisture content | | | | 0.35 | 0.34 | 0.38 | 0.27 | 0.25 | 0.38 | 0.24 | 0.30 | 0.32 | 0.31 | 0.33 | 0.34 |
| Moisture absorption rate (25°C/55%(100 hours)) | | | | 1.9 | 1.8 | 1.9 | 1.8 | 1.8 | 2.0 | 1.8 | 1.9 | 1.9 | 2.0 | 1.9 | 1.9 |
| Evaluation item | | Cleaning property | | 4 | 4 | 4 | 4 | 4 | 5 | 4 | 3 | 2 | 2 | 3 | 4 |
| | | Aggregability | | 5 | 5 | 5 | 5 | 5 | 5 | 5 | 5 | 5 | 5 | 5 | 5 |
| | | Member suitability | | 5 | 5 | 5 | 2 | 2 | 2 | 3 | 5 | 5 | 2 | 5 | 5 |
| | | Moisture retaining property | | 2 | 2 | 2 | 2 | 3 | 2 | 3 | 3 | 4 | 5 | 5 | 5 |
| | | Left cleaning property | | 5 | 5 | 5 | 5 | 5 | 5 | 5 | 5 | 5 | 5 | 5 | 5 |

**[Table 2]**

| | | | | Example 1-13 | Example 1-14 | Example 1-15 | Example 1-16 | Example 1-17 | Example 1-18 | Example 1-19 | Example 1-20 | Example 1-21 | Example 1-22 | Example 1-23 | Example 1-24 |
|---|---|---|---|---|---|---|---|---|---|---|---|---|---|---|---|
| Classification | Type | Name | EOV | | | | | | | | | | | | |
| Amide-based solvent | Alkylamide-based solvent | N,N-diethylformamide | 41.4 | 15.00 | 10.00 | | | | 20.00 | 40.00 | 40.00 | 40.00 | 70.00 | 80.00 | 90.00 |
| | | N,N-diethylpropanamide | 43.1 | | | | | | | | | | | | |
| | | N,N-diethylacetamide | 42.2 | | | | | | | | | | | | |
| | | N,N-dimethylformamide | 39.0 | | | | | | | | | | | | |
| | Cyclic amide-based solvent | N-methyl oxazolidinone | 50.4 | | | | | | | | | | | | |
| tone-based solv | 5-membered ring | *γ*-butyrolactone | 44.0 | | | | | | | | 10.00 | | | | |
| | 6-membered or higher membered ring | δ-valerolactone | 45.4 | | | | | | | | | | | | |
| | | ε-caprolactone | 46.2 | | 5.00 | 15.00 | 30.00 | 40.00 | | | | 10.00 | | | |
| Glycol ether-based solvent | Glycol ether monoalkyl | Triethylene glycol monobutyl ether | 60.0 | 10.00 | 10.00 | 10.00 | 10.00 | 10.00 | 10.00 | 10.00 | 10.00 | 10.00 | 10.00 | 10.00 | 10.00 |
| | | Dipropylene glycol monomethyl ether | 51.1 | | | | | | | | | | | | |
| | | Tripropylene glycol monomethyl ether | 59.1 | | | | | | | | | | | | |
| | Glycol ether dialkyl | Diethylene glycol dibutyl ether | 47.2 | | | | | | | | | | | | |
| | | Diethylene glycol methyl ethyl ether | 38.8 | | | | | | | | | | | | |
| | | Diethylene glycol diethyl ether | 40.9 | 75.00 | 75.00 | 75.00 | 60.00 | 50.00 | 70.00 | 50.00 | 40.00 | 40.00 | 20.00 | 10.00 | |
| | | Dipropylene glycol dimethyl ether | 39.8 | | | | | | | | | | | | |
| | Carbonate ester | Propylene carbonate | 47.8 | | | | | | | | | | | | |
| | Lactate ester | Methyl lactate | 44.5 | | | | | | | | | | | | |
| | Dibasic ester | Diethyl succinate | 45.5 | | | | | | | | | | | | |
| Su rfactant | Polyether-modified | BYK-331 | | | | | | | | | | | | | |
| | Polyester-modified | BYK-313 | | | | | | | | | | | | | |
| Dispersant | Polycaprolactone-based | Solsperse32000 | | | | | | | | | | | | | |
| | | Solsperse33000 | | | | | | | | | | | | | |
| Pigment | Carbon black | | | | | | | | | | | | | | |
| | Cyan (PB15:4) | | | | | | | | | | | | | | |
| | Magenta (PR122) | | | | | | | | | | | | | | |
| | Yellow (PY155) | | | | | | | | | | | | | | |
| Total | | | | 100.00 | 100.00 | 100.00 | 100.00 | 100.00 | 100.00 | 100.00 | 100.00 | 100.00 | 100.00 | 100.00 | 100.00 |
| Moisture content | | | | 0.33 | 0.33 | 0.34 | 0.36 | 0.40 | 0.35 | 0.30 | 0.30 | 0.30 | 0.24 | 0.21 | 0.19 |
| Moisture absorption rate (25°C/55%(100 hours)) | | | | 2.0 | 2.1 | 2.0 | 2.2 | 2.5 | 2.0 | 2.5 | 2.5 | 2.5 | 3.5 | 3.5 | 3.5 |
| Evaluation item | | Cleaning property | | 5 | 5 | 4 | 5 | 5 | 5 | 5 | 5 | 5 | 5 | 5 | 5 |
| | | Aggregability | | 5 | 5 | 5 | 5 | 5 | 5 | 5 | 5 | 5 | 5 | 4 | 3 |
| | | Member suitability | | 5 | 5 | 5 | 5 | 4 | 5 | 5 | 2 | 5 | 4 | 3 | 3 |
| | | Moisture retaining property | | 5 | 5 | 5 | 5 | 5 | 5 | 5 | 5 | 5 | 5 | 5 | 4 |
| | | Left cleaning property | | 5 | 5 | 5 | 5 | 5 | 5 | 5 | 5 | 5 | 4 | 4 | 4 |

**[Table 3]**

| | | | | Example 1-25 | Example 1-26 | Example 1-27 | Example 1-28 | Example 1-29 | Example 1-30 | Example 1-31 | Example 1-32 | Example 1-33 | Example 1-34 | Example 1-35 | Example 1-36 |
|---|---|---|---|---|---|---|---|---|---|---|---|---|---|---|---|
| Classification | Type | Name | EOV | | | | | | | | | | | | |
| Amide-based solvent | Alkylamide-based solvent | N,N-diethylformamide | 41.4 | 100.00 | 20.00 | 20.00 | 20.00 | 20.00 | 20.00 | 20.00 | 20.00 | 20.00 | 20.00 | 20.00 | 20.00 |
| | | N,N-diethylpropanamide | 43.1 | | | | | | | | | | | | |
| | | N,N-diethylacetamide | 42.2 | | | | | | | | | | | | |
| | | N,N-dimethylformamide | 39.0 | | | | | | | | | | | | |
| | Cyclic amide-based solvent | N-methyl oxazolidinone | 50.4 | | | | | | | | | | | | |
| ctone-based solv | 5-membered ring | *γ*-butyrolactone | 44.0 | | | | | | | | | | | | |
| | 6-membered or higher membered ring | δ-valerolactone | 45.4 | | | | | | | | | | | | |
| | | *ε*-caprolactone | 46.2 | | | | | | | | | | | | |
| Glycol ether-based solvent | Glycol ether monoalkyl | Triethylene glycol monobutyl ether | 60.0 | | 10.00 | 10.00 | 10.00 | 10.00 | 10.00 | | | 10.00 | | | |
| | | Dipropylene glycol monomethyl ether | 51.1 | | | | | | | 10.00 | | | | | |
| | | Tripropylene glycol monomethyl ether | 59.1 | | | | | | | | 10.00 | | | | |
| | Glycol ether dialkyl | Diethylene glycol dibutyl ether | 47.2 | | | | | | | | | | | | 80.00 |
| | | Diethylene glycol methyl ethyl ether | 38.8 | | | | | | | | | 70.00 | 80.00 | | |
| | | Diethylene glycol diethyl ether | 40.9 | | 70.00 | 70.00 | 70.00 | 70.00 | 70.00 | 70.00 | 70.00 | | | | |
| | | Dipropylene glycol dimethyl ether | 39.8 | | | | | | | | | | | 80.00 | |
| | Carbonate ester | Propylene carbonate | 47.8 | | | | | | | | | | | | |
| | Lactate ester | Methyl lactate | 44.5 | | | | | | | | | | | | |
| | Dibasic ester | Diethyl succinate | 45.5 | | | | | | | | | | | | |
| Surfactant | Polyether-modified | BYK-331 | | | | | | | | | | | | | |
| | Polyester-modified | BYK-313 | | | | | | | | | | | | | |
| Dispersant | Polycaprolactone-based | Solsperse32000 | | | | | | | | | | | | | |
| | | Solsperse33000 | | | | | | | | | | | | | |
| Pigment | Carbon black | | | | | | | | | | | | | | |
| | Cyan (PB15:4) | | | | | | | | | | | | | | |
| | Magenta (PR122) | | | | | | | | | | | | | | |
| | Yellow (PY155) | | | | | | | | | | | | | | |
| Total | | | | 100.00 | 100.00 | 100.00 | 100.00 | 100.00 | 100.00 | 100.00 | 100.00 | 100.00 | 100.00 | 100.00 | 100.00 |
| Moisture content | | | | 0.16 | 1.02 | 1.80 | 2.62 | 4.10 | 4.81 | 0.28 | 0.25 | 0.26 | 0.22 | 0.20 | 0.24 |
| Moisture absorption rate (25°C/55% (100 hours)) | | | | 3.4 | 2.2 | 2.2 | 2.2 | 2.2 | 2.2 | 2.1 | 2.1 | 2.2 | 2.0 | 1.7 | 1.7 |
| Evaluation item | | Cleaning property | | 5 | 5 | 4 | 3 | 3 | 3 | 5 | 5 | 5 | 5 | 5 | 5 |
| | | Aggregability | | 2 | 5 | 4 | 4 | 3 | 3 | 5 | 5 | 5 | 5 | 5 | 5 |
| | | Member suitability | | 2 | 5 | 5 | 5 | 5 | 5 | 5 | 5 | 5 | 5 | 5 | 5 |
| | | Moisture retaining property | | 2 | 5 | 5 | 5 | 5 | 5 | 3 | 4 | 5 | 2 | 2 | 5 |
| | | Left cleaning property | | 4 | 5 | 4 | 3 | 2 | 2 | 5 | 5 | 5 | 5 | 5 | 5 |

**[Table 4]**

| | | | | Example 1-37 | Example 1-38 | Example 1-39 | Example 1-40 | Example 1-41 | Example 1-42 | Example 1-43 | Example 1-44 | Example 1-45 | Example 1-46 | Example 1-47 | Example 1-48 |
|---|---|---|---|---|---|---|---|---|---|---|---|---|---|---|---|
| Classification | Type | Name | EOV | | | | | | | | | | | | |
| Amide-based solvent | Alkylamide-based solvent | N,N-diethylformamide | 41.4 | 20.00 | 20.00 | 20.00 | | | 20.00 | | | 20.00 | 20.00 | 20.00 | 20.00 |
| | | N,N-diethylpropanamide | 43.1 | | | | | | | | | | | | |
| | | N,N-diethylacetamide | 42.2 | | | | | | | | | | | | |
| | | N,N-dimethylformamide | 39.0 | | | | | | | | | | | | |
| | Cyclic amide-based solvent | N-methyl oxazolidinone | 50.4 | | | | | | | | | | | | |
| tone-based solv | 5-membered ring | γ-butyrolactone | 44.0 | | | | | | | | | | | | |
| | 6-membered or higher membered ring | *δ*-valerolactone | 45.4 | | | | | | | | | | | | |
| | | *ε*-caprolactone | 46.2 | | | | 20.00 | 20.00 | | 20.00 | 20.00 | | | | |
| Glycol ether-based solvent | Glycol ether monoalkyl | Triethylene glycol monobutyl ether | 60.0 | | | | | 20.00 | 40.00 | 50.00 | 60.00 | 10.00 | 10.00 | 10.00 | 10.00 |
| | | Dipropylene glycol monomethyl ether | 51.1 | | | | | | | | | | | | |
| | | Tripropylene glycol monomethyl ether | 59.1 | | | | | | | | | | | | |
| | Glycol ether dialkyl | Diethylene glycol dibutyl ether | 47.2 | | | | | | | | | | | | |
| | | Diethylene glycol methyl ethyl ether | 38.8 | | | | | | | | | | | | |
| | | Diethylene glycol diethyl ether | 40.9 | 70.00 | 70.00 | 70.00 | 80.00 | 60.00 | 40.00 | 30.00 | 20.00 | 69.90 | 69.90 | 69.90 | 69.90 |
| | | Dipropylene glycol dimethyl ether | 39.8 | | | | | | | | | | | | |
| | Carbonate ester | Propylene carbonate | 47.8 | 10.00 | | | | | | | | | | | |
| | Lactate ester | Methyl lactate | 44.5 | | 10.00 | | | | | | | | | | |
| | Dibasic ester | Diethyl succinate | 45.5 | | | 10.00 | | | | | | | | | |
| Surfactant | Polyether-modified | BYK-331 | | | | | | | | | | | | 0.10 | |
| | Polyester-modified | BYK-313 | | | | | | | | | | | | | 0.10 |
| Dispersant | Polycaprolactone-based | Solsperse32000 | | | | | | | | | | 0.10 | | | |
| | | Solsperse33000 | | | | | | | | | | | 0.10 | | |
| Pigment | Carbon black | | | | | | | | | | | | | | |
| | Cyan (PB15:4) | | | | | | | | | | | | | | |
| | Magenta (PR122) | | | | | | | | | | | | | | |
| | Yellow (PY155) | | | | | | | | | | | | | | |
| Total | | | | 100.00 | 100.00 | 100.00 | 100.00 | 100.00 | 100.00 | 100.00 | 100.00 | 100.00 | 100.00 | 100.00 | 100.00 |
| Moisture content | | | | 0.29 | 0.36 | 0.33 | 0.26 | 0.44 | 0.62 | 0.65 | 0.80 | 0.32 | 0.33 | 0.33 | 0.32 |
| Moisture absorption rate (25°C/55%(100 hours)) | | | | 2.0 | 1.8 | 1.8 | 2.5 | 3.0 | 4.0 | 4.5 | 5.0 | 2.0 | 2.1 | 2.1 | 2.1 |
| Evaluation item | | Cleaning property | | 5 | 5 | 5 | 4 | 4 | 5 | 3 | 3 | 5 | 5 | 5 | 5 |
| | | Aggregability | | 5 | 5 | 5 | 5 | 5 | 4 | 4 | 4 | 5 | 5 | 5 | 5 |
| | | Member suitability | | 5 | 3 | 4 | 5 | 5 | 5 | 5 | 5 | 5 | 5 | 5 | 5 |
| | | Moisture retaining property | | 5 | 2 | 3 | 5 | 5 | 5 | 5 | 5 | 5 | 5 | 5 | 5 |
| | | Left cleaning property | | 5 | 5 | 5 | 5 | 4 | 3 | 2 | 2 | 5 | 5 | 5 | 5 |

**[Table 5]**

| | | | | Example 1-49 | Example 1-50 | Example 1-51 | Example 1-52 | Example 1-53 | Comparative Example 1-1 | Comparative Example 1-2 | Comparative Example 1-3 |
|---|---|---|---|---|---|---|---|---|---|---|---|
| Classification | Type | Name | EOV | | | | | | | | |
| Amide-based solvent | Alkylamide-based solvent | N,N-diethylformamide | 41.4 | 20.00 | 20.00 | 20.00 | 20.00 | 20.00 | 20.00 | | |
| | | N,N-diethylpropanamide | 43.1 | | | | | | | | |
| | | N,N-diethylacetamide | 42.2 | | | | | | | | |
| | | N,N-dimethylformamide | 39.0 | | | | | | | | |
| | Cyclic amide-based solvent | N-methyl oxazolidinone | 50.4 | | | | | | | | |
| tone-based solv | 5-membered ring | γ-butyrolactone | 44.0 | | | | | | | | |
| | 6-membered or higher membered ring | *δ*-valerolactone | 45.4 | | | | | | | | |
| | | *ε*-caprolactone | 46.2 | | | | | | | | |
| Glycol ether-based solvent | Glycol ether monoalkyl | Triethylene glycol monobutyl ether | 60.0 | 10.00 | 10.00 | 10.00 | 10.00 | 10.00 | 10.00 | 10.00 | |
| | | Dipropylene glycol monomethyl ether | 51.1 | | | | | | | | |
| | | Tripropylene glycol monomethyl ether | 59.1 | | | | | | | | |
| | Glycol ether dialkyl | Diethylene glycol dibutyl ether | 47.2 | | | | | | | | |
| | | Diethylene glycol methyl ethyl ether | 38.8 | | | | | | | | 100.00 |
| | | Diethylene glycol diethyl ether | 40.9 | 69.98 | 69.98 | 69.98 | 69.98 | 69.97 | 70.00 | 90.00 | |
| | | Dipropylene glycol dimethyl ether | 39.8 | | | | | | | | |
| | Carbonate ester | Propylene carbonate | 47.8 | | | | | | | | |
| | Lactate ester | Methyl lactate | 44.5 | | | | | | | | |
| | Dibasic ester | Diethyl succinate | 45.5 | | | | | | | | |
| Surfactant | Polyether-modified | BYK-331 | | | | | | 0.10 | | | |
| | Polyester-modified | BYK-313 | | | | | | | | | |
| Dispersant | Polycaprolactone-based | Solsperse32000 | | 0.01 | 0.01 | 0.01 | 0.01 | 0.01 | | | |
| | | Solsperse33000 | | | | | | | | | |
| Pigment | Carbon black | | | 0.01 | | | | | | | |
| | Cyan (PB15:4) | | | | 0.01 | | | | | | |
| | Magenta (PR122) | | | | | 0.01 | | | | | |
| | Yellow (PY155) | | | | | | 0.01 | 0.01 | | | |
| Total | | | | 100.00 | 100.00 | 100.00 | 100.00 | 100.09 | 100.00 | 100.00 | 100.00 |
| Moisture content | | | | 0.30 | 0.36 | 0.34 | 0.33 | 0.33 | 5.03 | 0.24 | 0.26 |
| Moisture absorption rate (25°C/55%(100 hours)) | | | | 2.0 | 1.9 | 2.0 | 2.1 | 2.1 | 2.2 | 2.9 | 2.5 |
| Evaluation item | | Cleaning property | | 5 | 5 | 5 | 5 | 5 | 1 | 1 | 1 |
| | | Aggregability | | 5 | 5 | 5 | 5 | 5 | 2 | 5 | 5 |
| | | Member suitability | | 5 | 5 | 5 | 5 | 5 | 5 | 5 | 5 |
| | | Moisture retaining property | | 5 | 5 | 5 | 5 | 5 | 5 | 4 | 1 |
| | | Left cleaning property | | 5 | 5 | 5 | 5 | 5 | 2 | 5 | 4 |

**[Table 6]**

| Type | Composition | Black | Cyan | Magenta | Yellow |
|---|---|---|---|---|---|
| Pigment | Carbon black | 3.0 | | | |
| | Cyan (C.I. pigment blue 15:4) | | 3.0 | | |
| | Magenta (C.I. pigment red 122) | | | 3.5 | |
| | Yellow (C.I. pigment yellow 155) | | | | 3.5 |
| Dispersant | Solsperse32000 | 1.5 | 1.5 | 1.8 | 1.8 |
| Solvent | *γ*-butyrolactone | 15.0 | 15.0 | 15.0 | 15.0 |
| | Diethylene glycol diethyl ether | 51.4 | 51.4 | 50.6 | 50.6 |
| | Dipropylene glycol dimethyl ether | 15.0 | 15.0 | 15.0 | 15.0 |
| | Tetraethylene glycol monobutyl ether | 10.0 | 10.0 | 10.0 | 10.0 |
| Resin | Paralloid B60 (acrylic resin) | 2.5 | 2.5 | 2.5 | 2.5 |
| | NNOL E15/45(Vinyl chloride-vinyl acetate copolymer res | 1.5 | 1.5 | 1.5 | 1.5 |
| Additive | BYK-331(Silicone-based surfactant) | 0.1 | 0.1 | 0.1 | 0.1 |
| Total | | 100.0 | 100.0 | 100.0 | 100.0 |

As can be seen from Tables 1 to 5, the maintenance liquids in Examples, in each of which a moisture content is controlled to a predetermined range or less and each of which contains at least one or more of an amide-based solvent and a lactone-based solvent, had a good cleaning property and member suitability. Accordingly, it can be seen that the maintenance liquid according to the present invention has high member suitability with respect to the members constituting the inkjet recording device and an excellent cleaning property.

Especially, among the maintenance liquids in Examples 1-1 to 1-5, which contain amide-based solvents whose types are changed, the maintenance liquids in Examples 1-1 to 1-3 contain at least one selected from the group consisting of N,N-diethylformamide, N,N-diethylpropanamide, and N,N-diethylacetamide, and thus had good member suitability as compared with the maintenance liquids in Examples 1-4 and 1-5.

Among the maintenance liquids in Examples 1-6 to 1-8 which contain lactone-based solvents whose types are changed, the maintenance liquids in Examples 1-7 and 1-8, each of which contains a lactone-based solvent having a 6-membered or higher membered ring, had good member suitability and moisture retaining property, as compared with the maintenance liquid in Example 1-6.

The maintenance liquid in Example 1-12 containing an organic solvent (triethylene glycol mono-n-butyl ether) having an enthalpy of vaporization (EOV) of 45 kJ/mol or more had a good moisture retaining property, as compared with the maintenance liquid in Example 1-1.

Among the maintenance liquids in Examples 1-9, 1-11 to 1-13, 1-18, 1-19, and 1-22 to 1-25, which contain amide-based solvents whose contents are changed, the maintenance liquids in Examples 1-11 to 1-13, 1-18, 1-19, and 1-22 to 1-25, in each of which a content of the amide-based solvent is in a range of 7 mass% or more, had a good cleaning property. The maintenance liquids in Examples 1-9, 1-11 to 1-13, 1-18, 1-19, 1-22, in each of which a content of the amide-based solvent is in a range of 70 mass% or less, had good member suitability.

Among the maintenance liquids in Examples 1-18 and 1-26 to 1-30, in which moisture contents are changed, Examples 1-18 and 1-26, in which moisture contents are 1.5 mass% or less, had a good cleaning property and aggregability, as compared with Examples 1-27 to 1-30.

Among the maintenance liquids in Examples 1-31 to 1-39, each of which contains an amide-based solvent and a glycol ether-based solvent, the maintenance liquids in Examples 1-31 to 1-33, 1-36, 1-37, and 1-39, each of which contains an organic solvent having an enthalpy of vaporization (EOV) of 45 kJ/mol or more, had a good moisture retaining property.

For the maintenance liquids in Examples 1-40, 1-41, 1-43, and 1-44, in each of which a content of glycol ether monoalkyl and glycol ether dialkyl is changed, there was a tendency that a higher content of the glycol ether monoalkyl indicates a higher moisture content after a moisture absorption test. The maintenance liquids in Examples 1-40 and 1-41, in each of which a moisture absorption amount when the maintenance liquid was placed in an environment with a humidity of 55% for 100 hours is 4 mass% or less of the total amount of the maintenance liquid, had a good left cleaning property, as compared with the maintenance liquids in Example 1-43 and 1-44. There was a tendency that for a maintenance liquid, a less moisture absorption amount after the left test indicates better cleaning property and aggregability.

The maintenance liquids in Examples 1-45 and 1-46, each of which contains a dispersant, the maintenance liquids in Examples 1-47 and 1-48, each of which contains a surfactant, and the maintenance liquids in Examples 1-49 to 1-53, each of which contains a pigment and a dispersant, also exhibited the effects of the present invention.

On the other hand, the maintenance liquid in Comparative Example 1-1, in which a moisture content is more than 5 mass% of a total amount of the maintenance liquid, and the maintenance liquids in Comparative Examples 1-2 and 1-3, which do not contain an amide-based solvent or a lactone-based solvent, had a poor cleaning property. Furthermore, the maintenance liquid in Comparative Examples 1-3, which contains only glycol ether dialkyl, also had poor member suitability.

### (Second Embodiment)

### 1. Production of Maintenance Liquid

Maintenance liquids (non-aqueous maintenance liquids) in Examples and Comparative Examples were produced by mixing components in proportions shown in the tables below. The unit is mass%. Note that and non-aqueous maintenance liquid refers to a maintenance liquid that does not intentionally contain water and does not substantially contain water.

### 2. Production of Ink Composition

Ink compositions used for evaluation of the maintenance liquids were produced by mixing components in proportions shown in Table 6 described above. The unit is mass%.

### 3. Evaluation

### (Moisture Retaining Property)

The moisture retaining property of the maintenance liquids in Examples and Comparative Examples were evaluated. Specifically, an inkjet recording device (trade name: VersaArt RE-640, manufactured by Roland DG Co., Ltd.) including a cleaning system was used, and was filled with the produced ink composition to print a nozzle check pattern, and normal ejection of the ink composition from all nozzles was confirmed. Then, after the ink composition was discharged, the maintenance liquids in Examples and Comparative Examples were loaded and left at room temperature of 25°C and humidity of 60% for one month. After that, the maintenance liquids were discharged, and the produced ink composition was reloaded, and a cleaning operation was performed once, and a nozzle check pattern was printed again, and then the number of non-ejecting nozzles was counted (indicated as "moisture retaining property" in the table).

### Evaluation Criteria

Evaluation 5: the number of non-ejecting nozzles is 0.
Evaluation 4: the number of non-ejecting nozzles is 1 to 4.
Evaluation 3: the number of non-ejecting nozzles is 5 to 10.
Evaluation 2: the number of non-ejecting nozzles is 11 to 20.
Evaluation 1: the number of non-ejecting nozzles is 21 or more.

### (Cleaning Property)

The cleaning property (dissolubility) of the maintenance liquids in Examples and Comparative Examples were evaluated. Specifically, 0.5 g of the produced ink composition was placed in a glass petri dish, placed in an oven at 60°C, and heated for 2 hours to dry the ink composition, and components derived from the ink composition were precipitated. Then, the precipitated components were allowed to cool to 25°C, and 1.0 g of the maintenance liquids in Examples and Comparative Examples were dropped onto the solidified components derived from the ink composition, and the dissolubility (cleaning property) thereof was visually evaluated (indicated as cleaning property in the table).

### Evaluation Criteria

Evaluation 5: all the solidified components were dissolved, and no solidified components remained.
Evaluation 4: all the solidified components were separated, and almost no solidified components remained.
Evaluation 3: all the solidified components were separated, but some of the solidified components were not dissolved.
Evaluation 2: all the solidified components were separated, but most of the separated lumps were not dissolved.
Evaluation 1: the solidified components were not separated.

### (Drying Property)

A drying property of the maintenance liquids in Examples and Comparative Examples were evaluated. Specifically, a genuine magenta ink was loaded into a printer (product name: VersaArt RE-640, manufactured by Roland DG Co., Ltd.), and solid printing was performed on a recording medium (paste polyvinyl chloride film (IMAGin JT5829R: manufactured by MACtac Co., Ltd.)) at a density of 100% to obtain a recorded matter 1. Then, the genuine ink was discharged and the maintenance liquids in Examples and Comparative Examples were loaded by an ink replacement operation of the printer. Further, the maintenance liquids were discharged, and the maintenance liquids were loaded again. That is, the ink replacement operation was performed twice. In this state, the maintenance liquids were discharged, and the printer was left in a non-humidified constant temperature room at 40°C for 5 days, then taken out to a 20°C environment and allowed to cool for 1 day. Next, the genuine magenta ink was loaded by the ink replacement operation of the printer, and solid printing was performed on the recording medium at a density of 100% to obtain a recorded matter 2. An X-Rite eXact (manufactured by X-Rite Co., Ltd.) was used to measure colors of the recorded matters 1 and 2 under conditions of a viewing angle of 2°, a measurement range of 4 mmp, and a D65 light source, and the drying property was evaluated according to the following evaluation criteria based on a color difference ΔE between a pattern of the recorded matter 1 and the recorded matter 2 (indicated as "drying property" in the table).

### Evaluation Criteria

Evaluation 5: ΔE is less than 3.
Evaluation 4: ΔE is 3 or more and less than 5.
Evaluation 3: ΔE is 5 or more and less than 7.5.
Evaluation 2: ΔE is 7.5 or more and less than 10.
Evaluation 1: ΔE is 10 or more.

### (Member Suitability)

The member suitability (member suitability of the inkjet head) of the maintenance liquids in Examples and Comparative Examples were evaluated. Specifically, 0.2 g of a cured product obtained by drying an epoxy adhesive (two-liquid curing type epoxy adhesive "1500", manufactured by Cemedine Co., Ltd.) used for members of the inkjet head at 60°C for one day, immersed in the maintenance liquids in Examples and Comparative Examples, and left at 60°C for 1 week, and an immersion test was performed to measure a change in weight of the cured product (indicated as "member suitability" in the table).

### Evaluation Criteria

Evaluation 5: the weight change rate is less than 3%, and the material of the epoxy adhesive does not deteriorate.
Evaluation 4: the weight change rate is 3% or more and less than 5%, and the material of the epoxy adhesive does not deteriorate.
Evaluation 3: the weight change rate is 5% or more and less than 10%, and the material of the epoxy adhesive does not deteriorate.
Evaluation 2: the weight change rate is 10% or more and less than 15%, and the material of the epoxy adhesive does not deteriorate.
Evaluation 1: the weight change rate is 15% or more and/or the material of the epoxy adhesive deteriorates.

**[Table 7]**

| | | | | Example 2-1 | Example 2-2 | Example 2-3 | Example 2-4 | Example 2-5 | Example 2-6 | Example 2-7 | Example 2-8 | Example 2-9 | Example 2-10 | Example 2-11 |
|---|---|---|---|---|---|---|---|---|---|---|---|---|---|---|
| Type | Name | Solvent volatilization rate (PE tube) | Boiling point | | | | | | | | | | | |
| Glycol ether monoalkyl | MFDG | 10% | 187 | | | | | | | | | | | |
| | MFTG | 8% | 242 | | | | | | | | | | | |
| Amide | DEF | 11% | 178 | 0.500 | 1.000 | 5.000 | 10.000 | 30.000 | 50.000 | 90.000 | 95.000 | 100.000 | 90.000 | 85.000 |
| | DEPA | 12% | 194 | | | | | | | | | | | |
| | M100 | 13% | 189 | | | | | | | | | | | |
| Carbonate ester | PC | 1% | 242 | | | | | | | | | | | |
| Cyclic ester | GBL | 6% | 204 | | | | | | | | | | | |
| | ECL | 3% | 225 | | | | | | | | | | | |
| Dialkyl ether | MEDG | 58% | 168 | | | | | | | | | | | |
| | DEDG | 54% | 190 | 94.500 | 94.000 | 90.000 | 85.000 | 65.000 | 45.000 | 10.000 | | | | |
| | DMFDG | 59% | 179 | | | | | | | | | | | |
| Momoalkyl ether | BTG | 3% | 278 | 5.000 | 5.000 | 5.000 | 5.000 | 5.000 | 5.000 | | 5.000 | | 10.000 | 15.000 |
| Dibasic ester | DESU | 16% | 218 | | | | | | | | | | | |
| Acetate | EGm MEA | 29% | 143 | | | | | | | | | | | |
| | EGm BEA | 41% | 192 | | | | | | | | | | | |
| | PGmMEA | 27% | 155 | | | | | | | | | | | |
| Carbonate | DEC | 77% | 127 | | | | | | | | | | | |
| Polysiloxane compound | BYK-331 | - | - | | | | | | | | | | | |
| Dispersant | Solsperse32000 | - | - | | | | | | | | | | | |
| Pigment | Cyan (C.I. pigment blue 15:4) | | | | | | | | | | | | | |
| | Magenta (C.I. pigment red 122) | | | | | | | | | | | | | |
| | Yellow (C.I, pigment yellow 155) | | | | | | | | | | | | | |
| | Carbon black | | | | | | | | | | | | | |
| Total | | | | 100.000 | 100.000 | 100.000 | 100.000 | 100.000 | 100.000 | 100.000 | 100.000 | 100.000 | 100.000 | 100.000 |
| Evaluation | | Moisture retaining property | | 2 | 3 | 3 | 4 | 5 | 5 | 5 | 5 | 5 | 5 | 5 |
| | | Cleaning property | | 2 | 3 | 3 | 3 | 5 | 5 | 5 | 5 | 5 | 5 | 5 |
| | | Drying property | | 4 | 4 | 5 | 5 | 5 | 5 | 5 | 5 | 5 | 3 | 3 |
| | | Member suitability | | 5 | 5 | 5 | 5 | 5 | 4 | 3 | 3 | 2 | 5 | 5 |

**[Table 8]**

| | | | | Example 2-12 | Example 2-13 | Example 2-14 | Example 2-15 | Example 2-16 | Example 2-17 | Example 2-18 | Example 2-19 | Example 2-20 | Example 2-21 | Example 2-22 |
|---|---|---|---|---|---|---|---|---|---|---|---|---|---|---|
| Type | Name | Solvent volatilization rate (PE tube) | Boiling point | | | | | | | | | | | |
| Glycol ether monoalkyl | MFDG | 10% | 187 | 30.000 | | | | | | | | | | |
| | MFTG | 8% | 242 | | 30.000 | | | | | | | | | |
| Amide | DEF | 11% | 178 | | | | | | | | | | 30.000 | 20.000 |
| | DEPA | 12% | 194 | | | 30.000 | | | | | | | | |
| | M100 | 13% | 189 | | | | 30.000 | | | | | | | |
| Carbonate ester | PC | 1% | 242 | | | | | 30.000 | | | | | | |
| Cyclic ester | GBL | 6% | 204 | | | | | | 30.000 | | | | | |
| | ECL | 3% | 225 | | | | | | | 30.000 | 20.000 | 10.000 | | |
| Dialkyl ether | MEDG | 58% | 168 | | | | | | | | 10.000 | 20.000 | | |
| | DEDG | 54% | 190 | 65.000 | 65.000 | 65.000 | 65.000 | 65.000 | 65.000 | 65.000 | 65.000 | 65.000 | 70.000 | |
| | DMFDG | 59% | 179 | | | | | | | | | | | 80.000 |
| Momoalkyl ether | BTG | 3% | 278 | 5.000 | 5.000 | 5.000 | 5.000 | 5.000 | 5.000 | 5.000 | 5.000 | 5.000 | | |
| Dibasic ester | DESU | 16% | 218 | | | | | | | | | | | |
| Acetate | EGmMEA | 29% | 143 | | | | | | | | | | | |
| | EGmBEA | 41% | 192 | | | | | | | | | | | |
| | PGmMEA | 27% | 155 | | | | | | | | | | | |
| Carbonate | DEC | 77% | 127 | | | | | | | | | | | |
| Polysiloxane compound | BYK-331 | - | - | | | | | | | | | | | |
| Dispersant | Solsperse32000 | - | - | | | | | | | | | | | |
| Pigment | Cyan (C.I. pigment blue 15:4) | | | | | | | | | | | | | |
| | Magenta (C.I. pigment red 122) | | | | | | | | | | | | | |
| | Yellow (C.I. pigment yellow 155) | | | | | | | | | | | | | |
| | Carbon black | | | | | | | | | | | | | |
| Total | | | | 100.000 | 100.000 | 100.000 | 100.000 | 100.000 | 100.000 | 100.000 | 100.000 | 100.000 | 100.000 | 100.000 |
| Evaluation | | Moisture retaining propert | | 4 | 5 | 5 | 5 | 5 | 5 | 5 | 4 | 3 | 4 | 4 |
| | | Cleaning property | | 3 | 3 | 5 | 5 | 3 | 5 | 5 | 5 | 5 | 5 | 5 |
| | | Drying property | | 5 | 5 | 5 | 5 | 3 | 4 | 3 | 3 | 4 | 5 | 5 |
| | | Member suitability | | 5 | 5 | 5 | 2 | 5 | 2 | 5 | 5 | 5 | 5 | 5 |

**[Table 9]**

| | | | | Example 2-23 | Example 2-24 | Example 2-25 | Example 2-26 | Example 2-27 | Example 2-28 | Example 2-29 | Example 2-30 | Example 2-31 | Example 2-32 | Example 2-33 |
|---|---|---|---|---|---|---|---|---|---|---|---|---|---|---|
| Type | Name | Solvent volatilization rate (PE tube) | Boiling point | | | | | | | | | | | |
| Glycol ether monoalkyl | MFDG | 10% | 187 | | | | | | 20.000 | | | 30.000 | 30.000 | 40.000 |
| | MFTG | 8% | 242 | | | | | | | 20.000 | | | | |
| Amide | DEF | 11% | 178 | 30.000 | 30.000 | 30.000 | 30.000 | 30.000 | 30.000 | 30.000 | 30.000 | 40.000 | 20.000 | 40.000 |
| | DEPA | 12% | 194 | | | | | | | | | | | |
| | M100 | 13% | 189 | | | | | | | | | | | |
| Carbonate ester | PC | 1% | 242 | | | | | | | | 5.000 | | | |
| Cyclic ester | GBL | 6% | 204 | | | | | | | | | | | |
| | ECL | 3% | 225 | | | | | | | | | | | |
| Dialkyl ether | MEDG | 58% | 168 | | | | | | 50.000 | 50.000 | 65.000 | 30.000 | 50.000 | |
| | DEDG | 54% | 190 | | | | | | | | | | | 10.000 |
| | DMFDG | 59% | 179 | | | | | | | | | | | |
| Momoalkyl ether | BTG | 3% | 278 | 5.000 | 5.000 | 5.000 | 5.000 | 5.000 | | | | | | |
| Dibasic ester | DESU | 16% | 218 | 65.000 | | | | | | | | | | |
| Acetate | GmMEA | 29% | 143 | | 65.000 | | | | | | | | | |
| | EGmBEA | 41% | 192 | | | 65.000 | | | | | | | | |
| | PGmMEA | 27% | 155 | | | | 65.000 | | | | | | | |
| Carbonate | DEC | 77% | 127 | | | | | 65.000 | | | | | | |
| Polysiloxane compound | BYK-331 | - | - | | | | | | | | | | | |
| Dispersant | Solsperse32000 | - | - | | | | | | | | | | | |
| Pigment | Cyan (C.I. pigment blue 15:4) | | | | | | | | | | | | | |
| | Magenta (C.I. pigment red 122) | | | | | | | | | | | | | |
| | Yellow (C.I. pigment yellow 155) | | | | | | | | | | | | | |
| | Carbon black | | | | | | | | | | | | | |
| Total | | | | 100.000 | 100.000 | 100.000 | 100.000 | 100.000 | 100.000 | 100.000 | 100.000 | 100.000 | 100.000 | 90.000 |
| Evaluation | | Moisture retaining propert | | 5 | 3 | 4 | 3 | 3 | 5 | 5 | 5 | 5 | 5 | 5 |
| | | Cleaning property | | 5 | 5 | 5 | 5 | 5 | 5 | 5 | 5 | 5 | 5 | 5 |
| | | Drying property | | 4 | 5 | 5 | 5 | 5 | 5 | 5 | 5 | 4 | 4 | 4 |
| | | Member suitability | | 4 | 4 | 4 | 5 | 3 | 5 | 5 | 5 | 5 | 5 | 4 |

**[Table 10]**

| | | | | Example 2-34 | Example 2-35 | Example 2-36 | Example 2-37 | Example 2-38 | Example 2-39 | Example 2-40 | Example 2-41 | Comparative Example 2-1 | Comparativ e Example 2-2 | Comparative Example 2-3 | Comparative Example 2-4 |
|---|---|---|---|---|---|---|---|---|---|---|---|---|---|---|---|
| Type | Name | Solvent volatilization rate (PE tube) | Boiling point | | | | | | | | | | | | |
| Glycol ether monoalkyl | MFDG | 10% | 187 | | | | | | | | | | | | |
| | MFTG | 8% | 242 | | | | | | | | | | | | |
| Amide | DEF | 11% | 178 | 30.000 | 30.000 | 30.000 | 30.000 | 30.000 | 30.000 | 30.000 | 30.000 | | | | |
| | DEPA | 12% | 194 | | | | | | | | | | | | |
| | M100 | 13% | 189 | | | | | | | | | | | | |
| Carbonate ester | PC | 1% | 242 | | | | | | | | | | | | |
| Cyclic ester | GBL | 6% | 204 | | | | | | | | | | | | |
| | ECL | 3% | 225 | | | | | | | | | | | | |
| Dialkyl ether | MEDG | 58% | 168 | | | | | | | | | 10.000 | | | |
| | DEDG | 54% | 190 | 64.900 | 64.500 | 64.985 | 64.850 | 64.250 | 64.850 | 64.850 | 64.850 | 90.000 | 95.000 | 90.000 | 80.000 |
| | DMFDG | 59% | 179 | | | | | | | | | | | | |
| Momoalkyl ether | BTG | 3% | 278 | 5.000 | 5.000 | 5.000 | 5.000 | 5.000 | 5.000 | 5.000 | 5.000 | | 5.000 | 10.000 | 20.000 |
| Dibasic ester | DESU | 16% | 218 | | | | | | | | | | | | |
| Acetate | EGmMEA | 29% | 143 | | | | | | | | | | | | |
| | EG m BEA | 41% | 192 | | | | | | | | | | | | |
| | PGmMEA | 27% | 155 | | | | | | | | | | | | |
| Carbonate | DEC | 77% | 127 | | | | | | | | | | | | |
| Polysiloxane compound | BYK-331 | - | - | 0.100 | | | | | | | | | | | |
| Dispersant | Solsperse32000 | - | - | | 0.500 | 0.005 | 0.050 | 0.250 | 0.050 | 0.050 | 0.050 | | | | |
| Pigment | Cyan (C.I. pigment blue 15:4) | | | | | 0.010 | 0.100 | 0.500 | | | | | | | |
| | Magenta (C.I. pigment red 122) | | | | | | | | 0.100 | | | | | | |
| | Yellow (C.I. pigment yellow 155) | | | | | | | | | 0.100 | | | | | |
| | Carbon black | | | | | | | | | | 0.100 | | | | |
| Total | | | | 100.000 | 100.000 | 100.000 | 100.000 | 100.000 | 100.000 | 100.000 | 100.000 | 100.000 | 100.000 | 100.000 | 100.000 |
| Evaluation | | Moisture retaining propert | | 5 | 5 | 5 | 5 | 5 | 5 | 5 | 5 | 1 | 1 | 2 | 5 |
| | | Cleaning property | | 5 | 5 | 5 | 5 | 5 | 5 | 5 | 5 | 2 | 1 | 1 | 1 |
| | | Drying property | | 5 | 5 | 5 | 5 | 5 | 5 | 5 | 5 | 5 | 5 | 3 | 1 |
| | | Member suitability | | 5 | 5 | 5 | 5 | 5 | 5 | 5 | 5 | 5 | 5 | 5 | 5 |

"MFDG" in the tables refers to "dipropylene glycol monomethyl ether".

"MFTG" in the tables refers to "tripropylene glycol monomethyl ether".

"DEF" in the tables refers to "N,N-diethylformamide".

"DEPA" in the tables refers to "N,N-diethylpropanamide".

"M100" in the tables refers to "N,N-dimethyl-β-propanamide".

"PC" in the tables refers to "propylene carbonate".

"GBL" in the tables refers to "γ-butyrolactone".

"ECL" in the tables refers to "ε-caprolactone".

"MEDG" in the tables refers to "diethylene glycol methyl ethyl ether".

"DEDG" in the tables refers to "diethylene glycol diethyl ether".

"DMFDG" in the tables refers to "dipropylene glycol dimethyl ether".

"BTG" in the tables refers to "triethylene glycol monobutyl ether".

"DESU" in the tables refers to "diethyl succinate".

"EGmMEA" in the tables refers to "ethylene glycol monomethyl ether acetate".

"EGmBEA" in the tables refers to "ethylene glycol monobutyl ether acetate".

"PGmMEA" in the tables refers to "prolylene glycol monomethyl ether acetate".

"DEC" in the tables refers to "diethyl carbonate".

As can be seen from the above tables, the maintenance liquids in Examples, each of which contains an organic solvent having a volatilization rate, upon volatilization by means of a storage test, of less than a predetermined value is excellent in the moisture retaining property in the plastic container and the plastic supply body in the inkjet recording device.

It also can be seen that among these maintenance liquids, the maintenance liquids in Examples 2-2 to 2-8, in each of which a content of the organic solvent A2 is in a range of 1 mass% or more and 95 mass% or less of a total amount of the maintenance liquid, are excellent in the moisture retaining property in the plastic container and the plastic supply body.

It can also be seen that among the maintenance liquids in Examples 2-5 and 2-12 to 2-18, in which the type of the organic solvent A2 was changed, the maintenance liquids in Example 2-5 and 2-14, each of which contains an alkylamide-based solvent represented by formula (2-2), are not only excellent in the moisture retaining property in the plastic container and the plastic supply body, but also excellent in the cleaning property and member suitability.

Examples 2-36 to 2-41, each of which contains a colorant, have high member suitability with respect to the resin cured product, like Example 2-5. Examples 2-35 to 2-41, each of which contains a dispersant, are excellent in the cleaning property like Example 2-5.

On the other hand, the maintenance liquids in Comparative Examples 2-1 to 2-4, which do not contain the organic solvent A2, do not exhibit the effects of the present invention.

### (Third Embodiment)

### 1. Production of Maintenance Liquid

Non-aqueous maintenance liquids and aqueous maintenance liquids in Examples and Comparative Examples were produced by mixing components in proportions shown in the tables below. The unit is mass%. Note that the non-aqueous maintenance liquid refers to a maintenance liquid that does not intentionally contain water and does not substantially contain water, and the aqueous maintenance liquid refers to a maintenance liquid containing water.

### 2. Production of Ink Composition

Ink compositions (non-aqueous ink composition and aqueous ink composition) used for evaluation of the maintenance liquids were produced by mixing components in proportions shown in Tables 6 described above and Table 19 below. The unit is mass%. Note that the non-aqueous ink composition refers to an ink composition that does not intentionally contain water and does not substantially contain water, and the aqueous ink composition refers to an ink composition containing water. The non-aqueous ink composition was used as an ink composition for the evaluation of the non-aqueous maintenance liquids, and the aqueous ink composition was used as an ink composition for the evaluation of the aqueous maintenance liquids.

An aqueous ink composition was prepared using a colorant (pigment dispersion), a resin (resin emulsion), a solvent, and water (ion-exchanged water) by mixing components having the proportions shown in the tables below. A method for preparing the pigment dispersion and the resin (resin emulsion) is shown below.

### (1) Production of Pigment Dispersant

A mixture of 63 g of methyl methacrylate, 27 g of butyl acrylate, 30 g of butyl methacrylate, 15 g of acrylic acid, 15 g of methacrylic acid, and 3.6 g of tert-butyl peroxy-2-ethylhexanoate were added dropwise over 1.5 hours to 200 g of toluene kept at 100°C. After completion of the dropwise addition, the mixture was allowed to react at 100°C for 2 hours and then cooled to obtain a resin solution. The resin was purified from the resin solution with hexane to obtain a pigment dispersion resin having a polymer average molecular weight (polystyrene equivalent) of 20000 and an acid value of 143 mgKOH/g.

2.5 g of the pigment dispersion resin obtained above and 0.6 g of N,N-dimethylaminoethanol were dissolved in 80 g of water (ion-exchanged water), and 15 g of C.I. Pigment Red 122 and 0.05 g of an antifoaming agent ("Surfynol 104PG" manufactured by Air Products Co., Ltd.) were added, and the obtained mixture was dispersed with a paint shaker using zirconia beads to obtain a pigment dispersion.

In a similar manner, C.I. pigment magenta 122 was changed to C.I. pigment yellow 155, C.I. pigment blue 15:3, and carbon black to obtain dispersions.

### (2) Production of Resin Emulsion

After sufficiently replacing the inside of the flask including a mechanical stirrer, a thermometer, a nitrogen gas introduction tube, a reflux tube and a dropping funnel with nitrogen gas, 0.75 g of a reactive surfactant (manufactured by Kao Corporation, trade name: Latemul PD- 104), 0.04 g of potassium persulfate, 1.5 g of methacrylic acid, and 150 g of pure water were charged, and stirred and mixed at 25°C. A mixture of 115.5 g of methyl methacrylate, 18 g of 2-ethylhexyl acrylate, and 15 g of butyl acrylate was added dropwise to the obtained mixture to prepare a pre-emulsion. Alternatively, after sufficiently replacing the inside of the flask including a mechanical stirrer, a thermometer, a nitrogen gas introduction tube, a reflux tube and a dropping funnel with nitrogen gas, 3 g of a reactive surfactant (manufactured by Kao Corporation, trade name: Latemul PD-104), 0.01 g of potassium persulfate, and 200 g of pure water were stirred and mixed at 70°C. After that, the prepared pre-emulsion was dropped into a flask over 3 hours. After further heating and aging at 70°C for 3 hours, cooling, adjusting the pH to 8 with N,N-dimethylethanolamine, and filtering with #150 mesh (manufactured by Nippon Orimono Co., Ltd.), 500 g of a resin emulsion (glass transition temperature: 64°C, acid value: 7 mg KOH/g, volume average particle size: 90 nm) having a solid content of 30 mass% by mass was obtained. Note that the volume average particle size (D50) of the resin emulsion was measured at 25°C using a particle size distribution analyzer (NANOTRACWAVE particle size analyzer manufactured by Microtrack Bell Co., Ltd.).

### 3. Evaluation

### (Moisture Retaining Property)

The moisture retaining property of the maintenance liquids in Examples and Comparative Examples were evaluated. Specifically, an inkjet recording device including a cleaning system was used, and was filled with the produced ink composition to print a nozzle check pattern, and normal ejection of the ink composition from all nozzles was confirmed. Then, after the ink composition was discharged, the maintenance liquids in Examples and Comparative Examples were loaded and left at room temperature of 25°C and humidity of 60% for one month. After that, the maintenance liquids were discharged, and the produced ink compositions were reloaded, and a cleaning operation was performed once, and a nozzle check pattern was printed again, and then the number of non-ejecting nozzles was counted (indicated as "moisture retaining property" in the table).

### Evaluation Criteria

Evaluation 5: the number of non-ejecting nozzles is 0.
Evaluation 4: the number of non-ejecting nozzles is 1 to 4.
Evaluation 3: the number of non-ejecting nozzles is 5 to 10.
Evaluation 2: the number of non-ejecting nozzles is 11 to 20.
Evaluation 1: the number of non-ejecting nozzles is 21 or more.

### (Cleaning Property)

The cleaning property (dissolubility) of the maintenance liquids in Examples and Comparative Examples were evaluated. Specifically, 0.5 g of the produced ink composition was placed in a glass petri dish, placed in an oven at 60°C, and heated for 2 hours to dry the ink composition, and components derived from the ink composition were precipitated. Then, the precipitated components were allowed to cool to 25°C, and 1.0 g of the maintenance liquids in Examples and Comparative Examples were dropped onto the solidified components derived from the ink composition, and the dissolubility (cleaning property) thereof was visually evaluated (indicated as cleaning property in the table).

### Evaluation Criteria

Evaluation 5: all the solidified components were dissolved, and no solidified components remained.
Evaluation 4: all the solidified components were separated, and almost no solidified components remained.
Evaluation 3: all the solidified components were separated, but some of the solidified components were not dissolved.
Evaluation 2: all the solidified components were separated, but most of the separated lumps were not dissolved.
Evaluation 1: the solidified components were not separated.

### (Drying Property)

A drying property of the maintenance liquids in Examples and Comparative Examples were evaluated. Specifically, a genuine magenta ink was loaded into an inkjet recording device, and solid printing was performed on a recording medium (paste polyvinyl chloride film (IMAGin JT5829R: manufactured by MACtac Co., Ltd.)) at a density of 100% to obtain a recorded matter 1. Then, the genuine ink was discharged and the maintenance liquids in Examples and Comparative Examples were loaded by an ink replacement operation of the printer. Further, the maintenance liquids were discharged, and the maintenance liquids were loaded again. That is, the ink replacement operation was performed twice. In this state, the maintenance liquids were discharged, and the printer was left in a non-humidified constant temperature room at 40°C for 5 days, then taken out to a 20°C environment and allowed to cool for 1 day. Next, the genuine magenta ink was loaded by the ink replacement operation of the printer, and solid printing was performed on the recording medium at a density of 100% to obtain a recorded matter 2. An X-Rite eXact (manufactured by X-Rite Co., Ltd.) was used to measure colors of the recorded matters 1 and 2 under conditions of a viewing angle of 2°, a measurement range of 4 mmp, and a D65 light source, and the drying property was evaluated according to the following evaluation criteria based on a color difference ΔE between a pattern of the recorded matter 1 and the recorded matter 2 (indicated as "drying property" in the table).

### Evaluation Criteria

Evaluation 5: ΔE is less than 3.
Evaluation 4: ΔE is 3 or more and less than 5.
Evaluation 3: ΔE is 5 or more and less than 7.5.
Evaluation 2: ΔE is 7.5 or more and less than 10.
Evaluation 1: ΔE is 10 or more.

### (Member Suitability 1)

The member suitability (member suitability to the inkjet head) of the maintenance liquids in Examples and Comparative Examples were evaluated. Specifically, 0.2 g of a cured product obtained by drying an epoxy adhesive (two-liquid curing type epoxy adhesive "1500", manufactured by Cemedine Co., Ltd.) used for members of the inkjet head at 60°C for one day was immersed in the maintenance liquids in Examples and Comparative Examples, and left at 60°C for 1 week, and an immersion test was performed to measure a change in weight of the cured product (indicated as "member suitability 1" in the table).

### Evaluation criteria

Evaluation 5: the weight change rate is less than 3%, and the material of the epoxy adhesive does not deteriorate.
Evaluation 4: the weight change rate is 3% or more and less than 5%, and the material of the epoxy adhesive does not deteriorate.
Evaluation 3: the weight change rate is 5% or more and less than 10%, and the material of the epoxy adhesive does not deteriorate.
Evaluation 2: the weight change rate is 10% or more and less than 15%, and the material of the epoxy adhesive does not deteriorate.
Evaluation 1: the weight change rate is 15% or more and/or the material of the epoxy adhesive deteriorates.

### (Member Suitability 2)

The member suitability (member suitability to the inkjet head) of the maintenance liquids in Examples and Comparative Examples was evaluated. Specifically, 0.2 g of a cured product obtained by drying a silicon resin (one-liquid type liquid rubber "KE1831", manufactured by Shin-Etsu Chemical Co., Ltd) used for members of the inkjet head at 120°C for 10 minutes was immersed in the maintenance liquids in Examples and Comparative Examples, and left at 60°C for 1 week, and an immersion test was performed to measure a change in weight of the cured product (indicated as "member suitability 2" in the table).

### Evaluation Criteria

Evaluation 5: the weight change rate is less than 5%, and the material of the silicon resin does not deteriorate.
Evaluation 4: the weight change rate is 5% or more and less than 10%, and the material of the silicon resin does not deteriorate.
Evaluation 3: the weight change rate is 10% or more and less than 15%, and the material of the silicon resin does not deteriorate.
Evaluation 2: the weight change rate is 15% or more and less than 20%, and the material of the silicon resin does not deteriorate.
Evaluation 1: the weight change rate is 20% or more and/or the material of the silicon resin deteriorates.

**[Table 11]**

| Classification | Type | Name | Example 3-1 | Example 3-2 | Example 3-3 | Example 3-4 | Example 3-5 | Example 3-6 | Example 3-7 | Example 3-8 | Example 3-9 |
|---|---|---|---|---|---|---|---|---|---|---|---|
| Organic solvent (a1) | Alkylamide | DEF | 1.000 | 5.000 | 10.000 | 30.000 | 90.000 | 95.000 | 30.000 | | |
| | | DEPA | | | | | | | | | |
| | | DEAA | | | | | | | | | |
| | | DMF | | | | | | | | | |
| Organic solvent (a2) | Cyclic amide | NMC | | | | | | | | | |
| | | NVC | | | | | | | | | |
| | | EC | | | | | | | | 5.000 | 10.000 |
| | | DMI | | | | | | | | | |
| | | MOZ | | | | | | | | | |
| Organic solvent (a3) | Lactone | GBL | | | | | | | | | |
| | | GVL | | | | | | | | | |
| | | DVL | | | | | | | | | |
| | | DHL | | | | | | | | | |
| | | ECL | | | | | | | | | |
| Other solvents | Dialkyl ether | DEGDBE | | | | | | | | | |
| | | MEDG | | | | | | | | | |
| | | DEDG | 94.000 | 90.000 | 85.000 | 65.000 | 10.000 | | 55.000 | 90.000 | 85.000 |
| | | DMFDG | | | | | | | | | |
| | Momoalkyl ether | BTG | 5.000 | 5.000 | 5.000 | 5.000 | | 5.000 | 15.000 | 5.000 | 5.000 |
| | | MFTG | | | | | | | | | |
| | | MFDG | | | | | | | | | |
| | Carbonate ester | PC | | | | | | | | | |
| Polysiloxane compound | Polyether-modified | BYK-331 | | | | | | | | | |
| Dispersant | Polycaprolactone-based | Solsperse32000 | | | | | | | | | |
| | Polycaprolactone-based | Solsperse33000 | | | | | | | | | |
| Pigment | Cyan (C.I. pigment blue 15:4) | | | | | | | | | | |
| | Magenta (C.I. pigment red 122) | | | | | | | | | | |
| | Yellow (C.I. pigment yellow 155) | | | | | | | | | | |
| | Carbon black | | | | | | | | | | |
| Total | | | 100.000 | 100.000 | 100.000 | 100.000 | 100.000 | 100.000 | 100.000 | 100.000 | 100.000 |
| Evaluation | Moisture retaining property | | 2 | 3 | 4 | 5 | 5 | 5 | 5 | 3 | 4 |
| | Cleaning property | | 2 | 3 | 4 | 5 | 5 | 5 | 5 | 3 | 4 |
| | Drying property | | 4 | 5 | 5 | 5 | 5 | 5 | 3 | 5 | 5 |
| | Member suitability 1 | | 5 | 5 | 5 | 5 | 3 | 2 | 5 | 5 | 5 |
| | Member suitability 2 | | 5 | 5 | 5 | 5 | 3 | 2 | 5 | 5 | 5 |

**[Table 12]**

| Classification | Type | Name | Example 3-10 | Example 3-11 | Example 3-12 | Example 3-13 | Example 3-14 | Example 3-15 | Example 3-16 | Example 3-17 | Example 3-18 |
|---|---|---|---|---|---|---|---|---|---|---|---|
| Organic solvent (a1) | Alkylamide | DEF | | | | | | | | | |
| | | DEPA | | | | | | | | | 30.000 |
| | | DEAA | | | | | | | | | |
| | | DMF | | | | | | | | | |
| Organic solvent (a2) | Cyclic amide | NMC | | | | | | | | | |
| | | NVC | | | | | | | | | |
| | | EC | 20.000 | 30.000 | 50.000 | 10.000 | | | | | |
| | | DMI | | | | | | | | | |
| | | MOZ | | | | | | | | | |
| Organic solvent (a3) | Lactone | GBL | | | | | | | | | |
| | | GVL | | | | | | | | | |
| | | DVL | | | | | | | | | |
| | | DHL | | | | | | | | | |
| | | ECL | | | | | 5.000 | 20.000 | 30.000 | 50.000 | |
| Other solvents | Dialkyl ether | DEGDBE | | | | | | | | | |
| | | MEDG | | | | | | | | | |
| | | DEDG | 75.000 | 65.000 | 45.000 | 85.000 | 90.000 | 75.000 | 65.000 | 45.000 | 65.000 |
| | | DMFDG | | | | | | | | | |
| | Momoalkyl ether | BTG | 5.000 | 5.000 | 5.000 | 5.000 | 5.000 | 5.000 | 5.000 | 5.000 | 5.000 |
| | | MFTG | | | | | | | | | |
| | | MFDG | | | | | | | | | |
| | Carbonate ester | PC | | | | | | | | | |
| Polysiloxane compound | Polyether-modified | BYK-331 | | | | | | | | | |
| Dispersant | Polycaprolactone-based | Solsperse32000 | | | | | | | | | |
| | Polycaprolactone-based | Solsperse33000 | | | | | | | | | |
| Pigment | Cyan (C.I. pigment blue 15:4) | | | | | | | | | | |
| | Magenta (C.I. pigment red 122) | | | | | | | | | | |
| | Yellow (C.I. pigment yellow 155) | | | | | | | | | | |
| | Carbon black | | | | | | | | | | |
| Total | | | 100.000 | 100.000 | 100.000 | 100.000 | 100.000 | 100.000 | 100.000 | 100.000 | 100.000 |
| Evaluation | Moisture retaining property | | 5 | 5 | 5 | 3 | 4 | 5 | 5 | 5 | 5 |
| | Cleaning property | | 4 | 5 | 5 | 3 | 4 | 4 | 5 | 5 | 5 |
| | Drying property | | 5 | 4 | 3 | 5 | 5 | 5 | 4 | 3 | 5 |
| | Member suitability 1 | | 5 | 5 | 4 | 5 | 5 | 5 | 5 | 4 | 5 |
| | Member suitability 2 | | 5 | 5 | 3 | 5 | 5 | 5 | 5 | 4 | 5 |

**[Table 13]**

| Classification | Type | Name | Example 3-19 | Example 3-20 | Example 3-21 | Example 3-22 | Example 3-23 | Example 3-24 | Example 3-25 | Example 3-26 |
|---|---|---|---|---|---|---|---|---|---|---|
| Organic solvent (a1) | Alkylamide | DEF | | | | | | | | |
| | | DEPA | | | | | | | | |
| | | DEAA | 30.000 | | | | | | | |
| | | DMF | | 30.000 | | | | | | |
| Organic solvent (a2) | Cyclic amide | NMC | | | 30.000 | | | | | |
| | | NVC | | | | 30.000 | | | | |
| | | EC | | | | | | | | |
| | | DMI | | | | | 30.000 | | | |
| | | MOZ | | | | | | 30.000 | | |
| Organic solvent (a3) | Lactone | GBL | | | | | | | 30.000 | |
| | | GVL | | | | | | | | 30.000 |
| | | DVL | | | | | | | | |
| | | DHL | | | | | | | | |
| | | ECL | | | | | | | | |
| Other solvents | Dialkyl ether | DEGDBE | | | | | | | | |
| | | MEDG | | | | | | | | |
| | | DEDG | 65.000 | 65.000 | 65.000 | 65.000 | 65.000 | 65.000 | 65.000 | 65.000 |
| | | DMFDG | | | | | | | | |
| | Momoalkyl ether | BTG | 5.000 | 5.000 | 5.000 | 5.000 | 5.000 | 5.000 | 5.000 | 5.000 |
| | | MFTG | | | | | | | | |
| | | MFDG | | | | | | | | |
| | Carbonate ester | PC | | | | | | | | |
| Polysiloxane compound | Polyether-modified | BYK-331 | | | | | | | | |
| Dispersant | Polycaprolactone-based | Solsperse32000 | | | | | | | | |
| | Polycaprolactone-based | Solsperse33000 | | | | | | | | |
| Pigment | Cyan (C.I. pigment blue 15:4) | | | | | | | | | |
| | Magenta (C.I. pigment red 122) | | | | | | | | | |
| | Yellow (C.I. pigment yellow 155) | | | | | | | | | |
| | Carbon black | | | | | | | | | |
| Total | | | 100.000 | 100.000 | 100.000 | 100.000 | 100.000 | 100.000 | 100.000 | 100.000 |
| Evaluation | Moisture retaining property | | 5 | 2 | 5 | 5 | 5 | 5 | 5 | 5 |
| | Cleaning property | | 5 | 5 | 5 | 5 | 5 | 5 | 5 | 5 |
| | Drying property | | 5 | 5 | 4 | 4 | 4 | 3 | 4 | 4 |
| | Member suitability 1 | | 5 | 2 | 5 | 5 | 2 | 2 | 2 | 2 |
| | Member suitability 2 | | 5 | 2 | 5 | 5 | 2 | 2 | 2 | 3 |

**[Table 14]**

| Classification | Type | Name | Example 3-27 | Example 3-28 | Example 3-29 | Example 3-30 | Example 3-31 | Example 3-32 | Example 3-33 | Example 3-34 |
|---|---|---|---|---|---|---|---|---|---|---|
| Organic solvent (a1) | Alkylamide | DEF | | | 15.000 | 15.000 | 15.000 | 15.000 | | |
| | | DEPA | | | | | | | | |
| | | DEAA | | | | | | | | |
| | | DMF | | | | | | | | |
| Organic solvent (a2) | Cyclic amide | NMC | | | | | | | | |
| | | NVC | | | | | | | | |
| | | EC | | | | | | | | |
| | | DMI | | | | | | | | |
| | | MOZ | | | | | | | | |
| Organic solvent (a3) | Lactone | GBL | | | | | | | 15.000 | |
| | | GVL | | | | | | | | |
| | | DVL | 30.000 | | | | | | | |
| | | DHL | | 30.000 | | | | | | |
| | | ECL | | | | | | | | 15.000 |
| Other solvents | Dialkyl ether | DEGDBE | | | | | | | | |
| | | MEDG | | | | | 65.000 | | | |
| | | DEDG | 65.000 | 65.000 | 75.000 | 65.000 | | 55.000 | 65.000 | 65.000 |
| | | DMFDG | | | | | | | | |
| | Momoalkyl ether | BTG | 5.000 | 5.000 | 10.000 | 20.000 | 20.000 | 30.000 | 20.000 | 20.000 |
| | | MFTG | | | | | | | | |
| | | MFDG | | | | | | | | |
| | Carbonate ester | PC | | | | | | | | |
| Polysiloxane compound | Polyether-modified | BYK-331 | | | | | | | | |
| Dispersant | Polycaprolactone-based | Solsperse32000 | | | | | | | | |
| | Polycaprolactone-based | Solsperse33000 | | | | | | | | |
| Pigment | Cyan (C.I. pigment blue 15:4) | | | | | | | | | |
| | Magenta (C.I. pigment red 122) | | | | | | | | | |
| | Yellow (C.I. pigment yellow 155) | | | | | | | | | |
| | Carbon black | | | | | | | | | |
| Total | | | 100.000 | 100.000 | 100.000 | 100.000 | 100.000 | 100.000 | 100.000 | 100.000 |
| Evaluation | Moisture retaining property | | 5 | 5 | 5 | 5 | 5 | 5 | 5 | 5 |
| | Cleaning property | | 5 | 5 | 5 | 5 | 5 | 5 | 5 | 4 |
| | Drying property | | 4 | 4 | 4 | 3 | 3 | 3 | 3 | 3 |
| | Member suitability 1 | | 4 | 4 | 5 | 5 | 5 | 5 | 2 | 5 |
| | Member suitability 2 | | 4 | 3 | 5 | 5 | 5 | 5 | 2 | 5 |

**[Table 15]**

| Class ification | Type | Name | Example 3-35 | Example 3-36 | Example 3-37 | Example 3-38 | Example 3-39 | Example 3-40 | Example 3-41 | Example 3-42 | Example 3-43 |
|---|---|---|---|---|---|---|---|---|---|---|---|
| Organic solvent (a1) | Alkylamide | DEF | 30.000 | 30.000 | 15.000 | 15.000 | 15.000 | 15.000 | 30.000 | 30.000 | 30.000 |
| | | DEPA | | | | | | | | | |
| | | DEAA | | | | | | | | | |
| | | DMF | | | | | | | | | |
| Organic solvent (a2) | Cyclic amide | NMC | | | | | | | | | |
| | | NVC | | | | | | | | | |
| | | EC | | | | | | | | | |
| | | DMI | | | | | | | | | |
| | | MOZ | | | | | | | | | |
| Organic solvent (a3) | Lactone | GBL | | | | | | | | | |
| | | GVL | | | | | | | | | |
| | | DVL | | | | | | | | | |
| | | DHL | | | | | | | | | |
| | | ECL | | | | | | | | | |
| Other solvents | Dialkyl ether | DEGDBE | 65.000 | | | | | | | | |
| | | MEDG | | | | | | | | | |
| | | DEDG | | | 65.000 | 65.000 | 30.000 | 80.000 | 64.900 | 64.500 | 64.500 |
| | | DMFDG | | 65.000 | | | | | | | |
| | Momoalkyl ether | BTG | 5.000 | 5.000 | | | | | 5.000 | 5.000 | 5.000 |
| | | MFTG | | | 20.000 | | | | | | |
| | | MFDG | | | | 20.000 | 55.000 | | | | |
| | Carbonate ester | PC | | | | | | 5.000 | | | |
| Polysiloxane compound | Polyether-modified | BYK-331 | | | | | | | 0.100 | | |
| Dispersant | Polycaprolactone-based | Solsperse32000 | | | | | | | | 0.500 | |
| | Polycaprolactone-based | Solsperse33000 | | | | | | | | | 0.500 |
| Pigment | Cyan (C.I. pigment blue 15:4) | | | | | | | | | | |
| | Magenta (C.I, pigment red 122) | | | | | | | | | | |
| | Yellow (C.I. pigment yellow 155) | | | | | | | | | | |
| | Carbon black | | | | | | | | | | |
| Total | | | 100.000 | 100.000 | 100.000 | 100.000 | 100.000 | 100.000 | 100.000 | 100.000 | 100.000 |
| Evaluation | Moisture retaining property | | 5 | 5 | 4 | 4 | 5 | 5 | 5 | 5 | 5 |
| | Cleaning property | | 5 | 5 | 5 | 5 | 5 | 5 | 5 | 5 | 5 |
| | Drying property | | 3 | 4 | 5 | 5 | 4 | 4 | 5 | 5 | 5 |
| | Member suitability 1 | | 5 | 5 | 5 | 5 | 5 | 5 | 5 | 5 | 5 |
| | Member suitability 2 | | 5 | 5 | 5 | 5 | 5 | 5 | 5 | 5 | 5 |

**[Table 16]**

| Classification | Type | Name | Example 3-44 | Example 3-45 | Example 3-46 | Example 3-47 | Comparative Example 3-1 | Comparative Example 3-2 | Comparative Example 3-3 | Comparative Example 3-4 |
|---|---|---|---|---|---|---|---|---|---|---|
| Organic solvent (a1) | Alkylamide | DEF | 30.000 | 30.000 | 30.000 | 30.000 | | | | |
| | | DEPA | | | | | | | | |
| | | DEAA | | | | | | | | |
| | | DMF | | | | | | | | |
| Organic solvent (a2) | Cyclic amide | NMC | | | | | | | | |
| | | NVC | | | | | | | | |
| | | EC | | | | | | | | |
| | | DMI | | | | | | | | |
| | | MOZ | | | | | | | | |
| Organic solvent (a3) | Lactone | GBL | | | | | | | | |
| | | GVL | | | | | | | | |
| | | DVL | | | | | | | | |
| | | DHL | | | | | | | | |
| | | ECL | | | | | | | | |
| Other solvents | Dialkyl ether | DEGDBE | | | | | | | | |
| | | MEDG | | | | | 10.000 | | | |
| | | DEDG | 64.895 | 64.895 | 64.895 | 64.895 | 90.000 | 95.000 | 90.000 | 80.000 |
| | | DMFDG | | | | | | | | |
| | Momoalkyl ether | BTG | 5.000 | 5.000 | 5.000 | 5.000 | | 5.000 | 10.000 | 20.000 |
| | | MFTG | | | | | | | | |
| | | MFDG | | | | | | | | |
| | Carbonate ester | PC | | | | | | | | |
| Polysiloxane compound | Polyether-modified | BYK-331 | | | | | | | | |
| Dispersant | Polycaprolactone-based | Solsperse32000 | | | | | | | | |
| | Polycaprolactone-based | Solsperse33000 | 0.005 | 0.005 | 0.005 | 0.005 | | | | |
| Pigment | Cyan (C.I. pigment blue 15:4) | | 0.100 | | | | | | | |
| | Magenta (C.I. pigment red 122) | | | 0.100 | | | | | | |
| | Yellow (C.I. pigment yellow 155) | | | | 0.100 | | | | | |
| | Carbon black | | | | | 0.100 | | | | |
| Total | | | 100.000 | 100.000 | 100.000 | 100.000 | 100.000 | 100.000 | 100.000 | 100.000 |
| Evaluation | Moistu re retaining property | | 5 | 5 | 5 | 5 | 1 | 1 | 2 | 5 |
| | Cleaning property | | 5 | 5 | 5 | 5 | 2 | 1 | 1 | 1 |
| | Drying property | | 5 | 5 | 5 | 5 | 5 | 5 | 3 | 1 |
| | Member suitability 1 | | 5 | 5 | 5 | 5 | 5 | 5 | 5 | 5 |
| | Member suitability 2 | | 5 | 5 | 5 | 5 | 5 | 5 | 5 | 5 |

"DEF" in the tables refers to "N,N-diethylformamide".

"DEPA" in the tables refers to "N,N-diethylpropanamide".

"DEAA" in the tables refers to "N,N-diethylacetamide".

"DMF" in the tables refers to "N,N-dimethylformamide".

"NMC" in the tables refers to "N-methylcaprolactam".

"NVC" in the tables refers to "N-vinylcaprolactam".

"EC" in the tables refers to "ε-caprolactam".

"DMI" in the tables refers to "1,3-dimethyl imidazolidinone".

"MOZ" in the tables refers to "N-methyl oxazolidinone".

"GBL" in the tables refers to "γ-butyrolactone".

"GVL" in the tables refers to "y-valerolactone".

"DVL" in the tables refers to "δ-valerolactone".

"DHL" in the tables refers to "δ-hexanolactone".

"ECL" in the tables refers to "ε-caprolactone".

"DEGDBE" in the tables refers to "diethylene glycol dibutyl ether".

"MEDG" in the tables refers to "diethylene glycol methyl ethyl ether".

"DEDG" in the tables refers to "diethylene glycol diethyl ether".

"DMFDG" in the tables refers to "dipropylene glycol dimethyl ether".

"BTG" in the tables refers to "triethylene glycol monobutyl ether".

"MFTG" in the tables refers to "tripropylene glycol monomethyl ether".

"MFDG" in the tables refers to "dipropylene glycol monomethyl ether".

"PC" in the tables refers to "propylene carbonate".

**[Table 17]**

| Classification | Type | Name | Comparative Example | | Examples | | | | | |
|---|---|---|---|---|---|---|---|---|---|---|
| | | | 4-1 | 4-2 | 4-1 | 4-2 | 4-3 | 4-4 | 4-5 | 4-6 |
| Organic solvent (a1) | Alkylamide | N,N-diethylformamide | | | 5.000 | 10.000 | 15.000 | 50.000 | 90.000 | 90.000 |
| Organic solvent (a2) | Cyclic amide | *ε* -caprolactam | | | | | | | | |
| | | 2-pyrrolidone | | | | | | | | |
| Organic solvent (a3) | Lactone | y-butyrolactone | | | | | | | | |
| | | *ε* -caprolactone | | | | | | | | |
| Other solvents | | Propylene glycol | 20.000 | 20.000 | | | | | | |
| | | 1,3-propanediol | 10.000 | | 10.000 | 10.000 | 10.000 | 10.000 | | |
| | | Glycerin | 5.000 | | 5.000 | 5.000 | 5.000 | 5.000 | 5.000 | |
| | | Water | Remainder | Remainder | Remainder | Remainder | Remainder | Remainder | Remainder | Remainder |
| Surfactant | Acetylene glycol-based | Dynol 607 | 0.500 | 0.500 | 0.500 | 0.500 | 0.500 | 0.500 | 0.500 | 0.500 |
| | | Surfynol 104 | | | | | | | | |
| | | Total | 100.000 | 100.000 | 100.000 | 100.000 | 100.000 | 100.000 | 100.000 | 100.000 |
| Evaluation | | Moisture retaining property | 2 | 1 | 3 | 4 | 5 | 5 | 5 | 4 |
| | | Cleaning property | 1 | 1 | 2 | 4 | 5 | 5 | 5 | 5 |
| | | Drying property | 2 | 3 | 3 | 4 | 5 | 5 | 5 | 5 |
| | | Member suitability 1 | 5 | 5 | 5 | 5 | 5 | 4 | 4 | 4 |
| | | Member suitability 2 | 5 | 5 | 5 | 5 | 5 | 4 | 4 | 4 |

**[Table 18]**

| Classification | Type | Name | Examples | | | | | | | |
|---|---|---|---|---|---|---|---|---|---|---|
| | | | 4-7 | 4-8 | 4-9 | 4-10 | 4-11 | 4-12 | 4-13 | 4-14 |
| Organic solvent (a1) | Alkylamide | N,N-diethylformamide | | | | | | 15.000 | 15.000 | 15.000 |
| Organic solvent (a2) | Cyclic amide | *ε* -caprolactam | 15.000 | | | | | | | |
| | | 2-pyrrolidone | | 15.000 | | | | | | |
| Organic solvent (a3) | Lactone | *γ* -butyrolactone | | | 15.000 | | | | | |
| | | *ε* -caprolactone | | | | 15.000 | | | | |
| Other solvents | | Propylene glycol | | | | | 50.000 | | 20.000 | |
| | | 1,3-propanediol | 10.000 | 10.000 | 10.000 | 10.000 | 10.000 | 10.000 | 10.000 | 10.000 |
| | | Glycerin | 5.000 | 5.000 | 5.000 | 5.000 | 5.000 | 5.000 | 5.000 | |
| | | Water | Remainder | Remainder | Remainder | Remainder | Remainder | Remainder | Remainder | Remainder |
| Surfactant | Acetylene glycol-based | Dynol 607 | 0.500 | 0.500 | 0.500 | 0.500 | 0.500 | | 0.500 | 0.500 |
| | | Surfynol 104 | | | | | | 0.500 | | |
| | | Total | 100.000 | 100.000 | 100.000 | 100.000 | 100.000 | 100.000 | 100.000 | 100.000 |
| Evaluation | | Moisture retaining property | 5 | 5 | 5 | 5 | 5 | 5 | 5 | 5 |
| | | Cleaning property | 4 | 4 | 5 | 4 | 4 | 5 | 5 | 5 |
| | | Drying property | 4 | 4 | 4 | 4 | 4 | 5 | 5 | 5 |
| | | Member suitability 1 | 4 | 2 | 2 | 5 | 5 | 5 | 5 | 5 |
| | | Member suitability 2 | 4 | 3 | 2 | 5 | 5 | 5 | 5 | 5 |

**[Table 19]**

| | | Example | | | |
|---|---|---|---|---|---|
| | Composition | Yellow | Magenta | Cyan | Black |
| Solvent | Propylene glycol | 20.0 | 20.0 | 20.0 | 20.0 |
| | 2-pyrrolidone | 10.0 | 10.0 | 10.0 | 10.0 |
| | Water | 32.5 | 32.5 | 32.5 | 32.5 |
| Acrylic resin | Resin emulsion | 17.0 | 17.0 | 17.0 | 17.0 |
| Additive | Polysiloxane compound | 0.5 | 0.5 | 0.5 | 0.5 |
| Pigment dispersion | Yellow pigment dispersion | 20.0 | | | |
| | Magenta pigment dispersion | | 20.0 | | |
| | Cyan pigment dispersion | | | 20.0 | |
| | Black pigment dispersion | | | | 20.0 |
| Total | | 100.0 | 100.0 | 100.0 | 100.0 |

It can be seen from the tables described above that the maintenance liquid in Examples, each of which contains the organic solvent A3, has high member suitability with respect to the resin cured product and an excellent cleaning property.

It can be seen that in Examples 3-1 to 3-6 in which contents of the alkylamide-based solvents are changed, the maintenance liquids in Examples 3-2 to 3-6, in each of which a content of the alkylamide-based solvent is in a range of 5 mass% or more, have an excellent cleaning property. In addition, it can be seen that the maintenance liquids in Examples 3-1 to 3-5, in each of which a content of the alkylamide-based solvent is in a range of 90 mass% or less of a total amount of the maintenance liquid, have high member suitability with respect to the resin cured product.

Further, it can be seen that in Examples 3-4, 3-18 to 3-28 in which the type of the organic solvent A3 was changed, the maintenance liquids in Example 3-4, 3-18 and 3-19, each of which contains an alkylamide-based solvent represented by the formula (3-1), in which R₂ and R₃ are alkyl groups having 2 to 4 carbon atoms, have well-balanced member suitability with respect to the resin cured product and a cleaning property, and more effectively exhibit the effects of the present invention.

It can be seen that Examples 3-29 to 3-40, in which the type of other organic solvents is changed, similarly exhibit the effects of the present invention.

Examples 3-44 to 3-47, each of which contains a colorant, had high member suitability with respect to a resin cured product, like Example 3-5. Examples 3-42 to 3-47, each of which contains a dispersant, have an excellent cleaning property like Example 3-5.

It can be seen that Examples 4-1 to 4-14, which contain water, also have high member suitability with respect to the resin cured product and an excellent cleaning property.

Among these, among Examples 4-7 to 4-11 containing a cyclic amide-based solvent or a lactone-based solvent, Example 4-7 containing a cyclic amide-based solvent represented by the formula (3-2), in which R₄ is an alkylene group having 4 to 5 carbon atoms, and Example 4-10 containing a lactone-based solvent represented by the formula (3-3), in which R₆ is an alkylene group having 4 or more and 5 or less carbon atoms, have high member suitability with respect to the resin cured product and an excellent cleaning property, as compared with Examples 4-7 and 4-8.

On the other hand, the non-aqueous maintenance liquids in Comparative Examples 3-1 to 3-4, which do not contain the organic solvent A3, and the aqueous maintenance liquids in Comparative Examples 4-1 and 4-2 do not exhibit the effects of the present invention.

### EXPLANATION OF REFERENCE NUMERALS

- 1:: inkjet head
- A:: resin cured product
- D:: ejection port

## Claims

1. A maintenance liquid for use in an inkjet recording device, the maintenance liquid comprising
an organic solvent,
the maintenance liquid having a moisture content of 5 mass% or less in a total amount of the maintenance liquid, and
the organic solvent containing at least one or more of an amide-based solvent or a lactone-based solvent.

2. The maintenance liquid according to claim 1, wherein a total content of the amide-based solvent and the lactone-based solvent is 7 mass% or more of the total amount of the maintenance liquid.

3. The maintenance liquid according to claim 1 or 2, wherein the organic solvent contains an amide-based solvent.

4. The maintenance liquid according to claim 3, wherein the amide-based solvent contains an alkylamide-based solvent.

5. The maintenance liquid according to claim 4, wherein the alkylamide-based solvent is represented by the following formula (1-1): 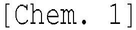 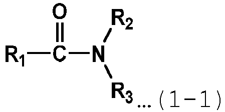 wherein R₁ represents hydrogen or an alkyl group having 1 or more and 4 or less carbon atoms, and R₂ and R₃ each independently represent an alkyl group having 1 or more and 4 or less carbon atoms.

6. The maintenance liquid according to claim 5, wherein the alkylamide-based solvent contains at least one selected from the group consisting of N,N-diethylformamide, N,N-diethylpropanamide, and N,N-diethylacetamide.

7. The maintenance liquid according to claim 1 or 2, wherein the organic solvent contains a lactone-based solvent.

8. The maintenance liquid according to claim 7, wherein the lactone-based solvent is represented by the following formula (1-3) : 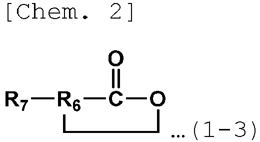 wherein R₆ represents an alkylene group having 3 or more and 5 or less carbon atoms, and R₇ represents hydrogen or an alkyl group having 1 or more and 2 or less carbon atoms.

9. The maintenance liquid according to any one of claims 1 to 8, wherein the organic solvent further contains a glycol ether-based solvent.

10. The maintenance liquid according to any one of claims 1 to 9, wherein the organic solvent further contains an organic solvent having an enthalpy of vaporization (EOV) of 45 kJ/mol or more.

11. The maintenance liquid according to any one of claims 1 to 10, wherein a moisture absorption amount when the maintenance liquid is placed in an environment with a temperature of 25°C and a humidity of 55% for 100 hours is 4 mass% or less of the total amount of the maintenance liquid.

12. The maintenance liquid according to any one of claims 1 to 11, wherein the inkjet recording device performs recording using a non-aqueous ink composition.

13. A maintenance liquid for use in an inkjet recording device, the maintenance liquid comprising
an organic solvent A2,
the organic solvent A2 having a boiling point of 250°C or lower and a volatilization rate, as determined by means of a storage test described below, of 15 mass% or less:
storage test: a low-density polyethylene tube is filled with the organic solvent A2, sealed, and stored at 50°C for one week.

14. The maintenance liquid according to claim 13, wherein a content of the organic solvent A2 is in a range of 1 mass% or more and 95 mass% or less of a total amount of the maintenance liquid.

15. The maintenance liquid according to claim 13 or 14, comprising at least one selected from the group consisting of glycol ether monoalkyl, a cyclic ester, a carbonate ester, and an amide-based solvent.

16. The maintenance liquid according to claim 15, comprising a cyclic ester, wherein
the cyclic ester is represented by the following formula (2-1) : 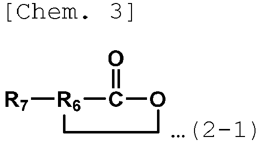 wherein R₆ represents an alkylene group having 3 or more and 5 or less carbon atoms, and R₇ represents hydrogen or an alkyl group having 1 or more and 2 or less carbon atoms.

17. The maintenance liquid according to claim 15 or 16, comprising an amide-based solvent, wherein
the amide-based solvent is represented by the following formula (2-2): 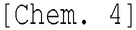 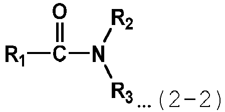 wherein R₁ represents hydrogen or an alkyl group having 1 or more and 4 or less carbon atoms, and R₂ and R₃ each independently represent hydrogen or an alkyl group having 1 or more and 4 or less carbon atoms.

18. The maintenance liquid according to any one of claims 13 to 17, wherein the inkjet recording device includes a plastic member that comes into contact with the maintenance liquid.

19. The maintenance liquid according to claim 18, wherein at least part of the plastic member is formed of a polyolefin.

20. The maintenance liquid according to claim 18 or 19, wherein the plastic member constitutes a plastic container that holds the maintenance liquid and/or a plastic supply body that supplies the maintenance liquid.

21. The maintenance liquid according to any one of claims 13 to 20, further comprising a colorant.

22. The maintenance liquid according to any one of claims 13 to 20, comprising no colorant.

23. The maintenance liquid according to any one of claims 13 to 22, further comprising a dispersant.

24. A maintenance liquid for use in an inkjet recording device provided with an inkjet head including a resin cured product as a component member, the maintenance liquid comprising
an organic solvent,
the organic solvent containing the following organic solvent A3:
organic solvent A3: at least one selected from the group consisting of an alkylamide-based solvent (a1), a cyclic amide-based solvent (a2), and a lactone-based solvent (a3).

25. The maintenance liquid according to claim 24, wherein the resin cured product contains at least an epoxy resin and/or a silicon resin.

26. The maintenance liquid according to claim 24 or 25, wherein the organic solvent contains the alkylamide-based solvent (a1), and
the alkylamide-based solvent (a1) is represented by the following formula (3-1): 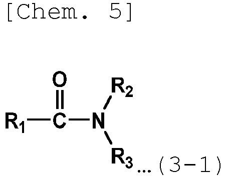 wherein R₁ represents hydrogen or an alkyl group having 1 or more and 4 or less carbon atoms, and R₂ and R₃ each independently represent hydrogen or an alkyl group having 1 or more and 4 or less carbon atoms.

27. The maintenance liquid according to claim 26, wherein the alkylamide-based solvent (a1) contains at least one selected from the group consisting of N,N-diethylformamide, N,N-diethylpropanamide, and N,N-diethylacetamide.

28. The maintenance liquid according to claim 24 or 25, wherein the organic solvent contains the cyclic amide-based solvent (a2), and
the cyclic amide-based solvent (a2) is represented by the following formula (3-2): 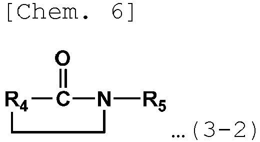 wherein R₄ represents an alkylene group having 4 or more and 5 or less carbon atoms, and R₅ represents hydrogen or an alkyl group or an unsaturated hydrocarbon group having 1 or more and 4 or less carbon atoms.

29. The maintenance liquid according to claim 28, wherein the cyclic amide-based solvent (a2) contains at least one selected from the group consisting of *ε*-caprolactam, N-methylcaprolactam, and N-vinylcaprolactam.

30. The maintenance liquid according to claim 24 or 25, wherein the organic solvent contains the lactone-based solvent (a3), and
the lactone-based solvent (a3) is represented by the following formula (3-3): 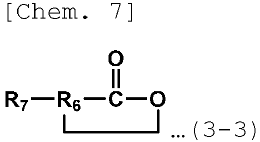 wherein R₆ represents an alkylene group having 3 or more and 5 or less carbon atoms, and R₇ represents hydrogen or an alkyl group having 1 or more and 2 or less carbon atoms.

31. The maintenance liquid according to claim 30, wherein the lactone-based solvent (a3) contains at least one selected from the group consisting of γ-butyrolactone, γ-valerolactone, δ-valerolactone, δ-hexanolactone, and *ε*-caprolactone.

32. The maintenance liquid according to any one of claims 24 to 31, further comprising a colorant.

33. The maintenance liquid according to any one of claims 24 to 31, comprising no colorant.

34. The maintenance liquid according to any one of claims 24 to 33, further comprising a dispersant.

35. An inkjet recording device maintenance method, comprising performing maintenance on an inkjet recording device using the maintenance liquid according to any one of claims 1 to 34.

36. An inkjet recording device, for which the maintenance liquid according to any one of claims 1 to 34 is used.

37. An inkjet recording device, for which the maintenance liquid according to any one of claims 13 to 23 is used, the inkjet recording device comprising
a plastic container and/or a plastic supply body, an interior of the inkjet recording device being in contact with the maintenance liquid.

38. An inkjet recording device, for which the maintenance liquid according to any one of claims 24 to 34 is used, the inkjet recording device comprising
an inkjet head including a resin cured product as a component member,
the maintenance liquid being used by bringing the maintenance liquid into contact with the resin cured product.
